# EUROPEAN PATENT SPECIFICATION

(11) **EP 3 722 093 B1**
(45) Date of publication and mention of the grant of the patent: **07.10.2026**
(21) Application number: 18883122.6
(22) Date of filing: 29.11.2018
(51) Int. Cl.: B32B 27/30, B29C 43/30, B29C 51/14, B29C 53/04, B32B 27/08, B32B 27/18, B32B 27/22, B32B 27/36, B32B 37/08

(54) **LAMINATE FOR THERMOFORMING AND MANUFACTURING METHOD THEREFOR**
LAMINAT ZUM THERMOFORMEN UND VERFAHREN ZU DESSEN HERSTELLUNG
STRATIFIÉ DESTINÉ AU THERMOFORMAGE ET SON PROCÉDÉ DE FABRICATION

(30) Priority: 30.11.2017 JP 2017230264
(43) Date of publication of application: 14.10.2020
(73) Proprietor: Kuraray Co., Ltd., Kurashiki-shi, Okayama 710-0801 (JP)
(72) Inventor: FUNAZAKI, Kazuo, Tainai-shi Niigata 959-2691 (JP); NINOMIYA, Masato, Tainai-shi Niigata 959-2691 (JP); TAGA, Sho, Tainai-shi Niigata 959-2691 (JP)
(74) Representative: Müller-Boré & Partner Patentanwälte PartG mbB
(86) International application number: PCT/JP2018/043891
(87) International publication number: WO 2019/107462

(56) References cited:
- WO-A1-2017/047560
- WO-A1-2017/047560
- WO-A1-2017/164276
- WO-A1-2017/164276
- JP-A- 2002 338 703
- JP-A- 2010 036 432
- JP-A- 2012 121 270
- JP-A- 2014 213 580
- JP-A- 2014 213 580
- JP-A- 2015 214 025

## Description

### Technical Field

The present invention relates to a laminate for thermoforming and a method for manufacturing the same.

### Background Art

Flat-panel displays such as liquid crystal displays, and touch panel displays in which such flat-panel displays are combined with touch panels (also called touch screens) are used in ATMs of financial institutions such as banks; vending machines; and digital information devices such as mobile phones (including smart phones), portable information terminals (PDAs) such as tablet-type personal computers, digital audio players, portable game machines, copying machines, facsimile machines, and car navigation systems.

A transparent protective plate is provided on a surface of, for example, a flat-panel display such as a liquid crystal display or a touch panel in order to prevent scratches and the like from being formed on the surface. Conventionally, tempered glass has been mainly used as such protective plates. However, the development of transparent resin plates has been in progress in view of their workability and lightweight. The protective plate is required to have features such as luster, abrasion resistance, and impact resistance.

As a protective plate made of a transparent resin, a resin plate including a polycarbonate layer, which is excellent in impact resistance, and a methacrylic resin layer, which is excellent in luster and abrasion resistance, has been studied. Such a resin plate is preferably manufactured by coextrusion molding. In this case, a strain stress may remain in the obtained resin plate due to a difference between characteristics of these two types of resins. The strain stress remaining on the resin plate is called a "residual stress". In a resin plate having this residual stress, there is a possibility that warping or the like may occur due to a thermal change.

As a method for reducing a residual stress in a resin plate and thereby preventing warping from occurring, Patent Literature 1 discloses a method for adjusting a rotating speed of a cooling roll used for extrusion molding (Claim 1). Patent Literature 2 discloses a method using a resin which is obtained by copolymerizing, as a methacrylic resin to be laminated on polycarbonate, a methacrylic acid ester such as methyl methacrylate (MMA) and an aromatic vinyl monomer such as styrene, and then hydrogenating an aromatic double bond (Claim 2).

Further, in order to solve the above-described problem, improvements in heat resistance and moisture resistance of methacrylic resins have been studied. For example, Patent Literature 3 discloses a method using, as a methacrylic resin to be laminated on polycarbonate, a resin having an MMA unit, and a unit selected from a methacrylic acid (MA) unit, an acrylic acid (AA) unit, a maleic anhydride unit, an N-substituted or unsubstituted maleimide unit, a glutaric anhydride structural unit, and a glutarimide structural unit, and having a glass transition temperature (Tg) of 110°C or higher (Claim 1).

A cured film having a low reflectivity for providing abrasion resistance (a hard coat property) and/or improving visibility can be formed on at least one of the surfaces of a protective plate (Claims 1 and 2 of Patent Literature 4, Claim 1 of Patent Literature 5, etc.).

A protective plate for a liquid crystal display is disposed on the front side (the viewer side) of the liquid crystal display, and a viewer views the screen of the liquid crystal display through this protective plate. Note that the protective plate hardly changes a polarization property of light emitted from the liquid crystal display. Therefore, when the screen is viewed through a polarizing filter such as polarized sunglasses, the screen may become darker depending on the angle between the polarization axis of the emitted light and the transmission axis of the polarizing filter, and hence the visibility of images may deteriorate. Therefore, a protective plate for a liquid crystal display, capable of preventing the deterioration of the visibility of images, which may occur when the screen of the liquid crystal display is viewed through the polarizing filter, has been studied. For example, Patent Literature 6 discloses a liquid crystal display protective plate formed of an abrasion resistant resin plate including a cured film formed on at least one of the surfaces of a resin substrate and having an in-plane retardation (Re) value of 85 to 300 nm (Claim 1).

In general, a stress occurs in an extruded resin plate when it is molded. As a result, molecules may be oriented and hence retardation may occur (see paragraph [0034] of Patent Literature 7). Further, in an extruded resin plate including a plurality of resin layers, each of the resin layers may have a different degree of a residual stress. Further, in the molding of an extruded resin plate, when the extruded resin plate is separated from the last cooling roll, streaky defects (so-called chatter marks) may occur on the surface of the extruded resin plate and hence its surface quality may deteriorate. It is possible to reduce the stress and the chatter marks that may occur during the molding by adjusting manufacturing conditions such as rotating speeds of cooling rolls and take-off rolls used in the extrusion molding.

For example, in order to reduce the stress that occurs during the molding of an extruded resin plate and to prevent an Re value from decreasing, each of Patent Literatures 7 and 8 discloses a method for manufacturing an extruded resin plate, in which when the extruded resin plate including a methacrylic resin layer laminated on at least one surface of a polycarbonate layer is coextruded, manufacturing conditions such as a relation between circumferential speeds of a plurality of cooling rolls and take-off rolls and an overall temperature of the resin at the time when the extruded resin plate is separated from the last cooling roll are optimized (Claim 1 of Patent Literature 7, Claims 3 and 4 of Patent Literature 8, etc.).

In recent years, regarding flat panel displays such as liquid crystal displays, in view of the design, displays that are subjected to a shaping process such as a curved-surface forming process has been proposed. In general, the shaping process such as a curved-surface forming process is performed through thermoforming such as press forming, vacuum forming, and pneumatic forming.

Patent Literature 9 is an example of related art related to the present invention, though it is not related to a protective plate for a flat panel display such as a liquid crystal display or for a touch panel or the like. Patent Literature 9 discloses a multi-layer film in which: a methacrylic resin layer, preferably one containing acrylic rubber particles, is laminated on one surface of a polycarbonate resin layer as a structure for reducing a stress and thereby preventing cracking and the like during thermoforming; the glass transition temperature of the polycarbonate is 130°C or lower; and a difference between the glass transition temperatures of the polycarbonate and the methacrylic resin is smaller than 25°C (Claim 1).

Patent Literature 10 describes an extruded resin sheet manufacturing method and extruded resin sheet.

### Citation List

### Patent Literature

Patent Literature 1: Japanese Unexamined Patent Application Publication No. 2007-185956
Patent Literature 2: International Patent Publication No. WO2011/145630
Patent Literature 3: Japanese Unexamined Patent Application Publication No. 2009-248416
Patent Literature 4: Japanese Unexamined Patent Application Publication No. 2004-299199
Patent Literature 5: Japanese Unexamined Patent Application Publication No. 2006-103169
Patent Literature 6: Japanese Unexamined Patent Application Publication No. 2010-085978
Patent Literature 7: International Patent Publication No. WO2015/093037
Patent Literature 8: International Patent Publication No. WO2016/038868
Patent Literature 9: Japanese Patent No. 5617162
Patent Literature 10: WO 2017/164276 A1

### Summary of Invention

### Technical Problem

Resin plates could be exposed to a high temperature in their manufacturing processes, in the thermoforming processes, or under the environment where they are used.

In a step of forming a cured film having abrasion resistance (a hard coat property) and/or a low reflectivity on a surface of a resin plate, the resin plate may be heated to a temperature of about 75 to 115°C. For example, curing of a thermosetting coating material requires heat, and a photocurable coating material receives heat when it is irradiated with light. When the coating material contains a solvent, it may be heated to dry the solvent.

In general, in view of the productivity, thermoforming such as a curved-surface forming process is performed after a cured film is formed on a surface. The temperature of the thermoforming is preferably 100 to 145°C because if the temperature is too high, the cured film may be cracked.

Further, a protective plate for a liquid crystal display provided in a vehicle-mounted display apparatus such as a car navigation system or a mobile phone (including a smartphone) may be used in a high-temperature environment at 100°C or higher, such as in a situation where such an apparatus or mobile phone is disposed on a dashboard under sunlight in summer.

When a resin plate is exposed to a high temperature in a manufacturing process, in a thermoforming process, or under an operating environment, a Re value is lowered by heat and may fall outside a desired range. It is desired that the thermal change of the Re value be small. Further, it is desired that neither surface roughness nor cracking occur during the thermoforming.

In Patent Literature 9, the glass transition temperature of polycarbonate is specified to 130°C or lower and the difference between the glass transition temperatures of the polycarbonate and a methacrylic resin is reduced in order to reduce the stress during the thermoforming. However, there is no description about the lower limit of the glass transition temperature of the polycarbonate. In the case where the multi-layer film disclosed in Patent Literature 9 is applied to a protective plate for a flat panel display such as a liquid crystal display or for a touch panel or the like, depending on the glass transition temperature of polycarbonate, the Re value may significantly decrease and fall outside the desired range when the polycarbonate is exposed to a high temperature in a step of forming a cured film or the like,. It is desirable that the thermal change of the Re value be small. However, Patent Literature 9, of which the use of the technique is different from that of the present invention, does not describe or suggest the Re value and the thermal change thereof, and does not disclose any means for reducing the thermal change of the Re value.

The present invention has been made in view of the above-described circumstances and an object thereof is to provide a laminate for thermoforming including an extruded resin plate in which a methacrylic-resin-containing layer is laminated on at least one surface of a polycarbonate-containing layer, and a cured film formed on at least one surface of the extruded resin plate, in which: an in-plane retardation value (Re) is within a range suitable as a protective plate or the like for a flat panel display such as a liquid crystal display or for a touch panel or the like; a rate of a decrease of the Re value due to heating is small; and surface roughness and cracking during the thermoforming are prevented.

Note that although the present invention is suitably used as a protective plate for a flat panel display such as a liquid crystal display, a touch panel, or the like, the present invention can also be used in other arbitrary uses.

### Solution to Problem

The present invention as well as its preferred embodiments are defined in the appended set of claims.

### Advantageous Effects of Invention

According to the present invention, it is possible to provide a laminate for thermoforming including an extruded resin plate in which a methacrylic-resin-containing layer is laminated on at least one surface of a polycarbonate-containing layer, and a cured film formed on at least one surface of the extruded resin plate, in which: an in-plane retardation value (Re) is within a range suitable as a protective plate or the like for a flat panel display such as a liquid crystal display or for a touch panel or the like; a rate of a decrease of the Re value due to heating is small; and surface roughness and cracking during the thermoforming are prevented.

### Brief Description of Drawings

Fig. 1 is a schematic cross section of a laminate for thermoforming according to a first embodiment of the present invention;
Fig. 2 is a schematic cross section of a laminate for thermoforming according to a second embodiment of the present invention; and
Fig. 3 is a schematic diagram of a manufacturing apparatus for an extruded resin plate according to an embodiment of the present invention.

### Description of Embodiments

### [Laminate for Thermoforming]

The present invention relates to a laminate for thermoforming including an extruded resin plate in which a methacrylic-resin-containing layer is laminated on at least one surface of a polycarbonate-containing layer, and a cured film formed on at least one surface of the extruded resin plate. The laminate for thermoforming is subjected to a shaping process such as a curved-surface forming process through thermoforming. The laminate for thermoforming is suitable as a protective plate or the like which is subjected to a shaping process such as a curved-surface forming process and is used for a flat panel display such as a liquid crystal display or for a touch panel or the like.

The polycarbonate-containing layer is a layer containing polycarbonate (PC), and a methacrylic-resin-containing layer is a layer containing a methacrylic resin (PM). The polycarbonate (PC) is excellent in impact resistance, and the methacrylic resin (PM) is excellent in luster, transparency, and abrasion resistance. Therefore, the laminate for thermoforming according to the present invention, which includes the extruded resin plate in which these resins are laminated, is excellent in luster, transparency, impact resistance, and abrasion resistance. Further, since the extruded resin plate included in the laminate for thermoforming according to the present invention is manufactured by an extrusion molding method, its productivity is excellent.

### (Methacrylic-resin-containing Layer)

The methacrylic-resin-containing layer contains at least one type of a methacrylic resin (PM). The methacrylic resin (PM) is preferably a homopolymer or a copolymer containing a structural unit derived from at least one type of a methacrylic acid hydrocarbon ester (hereinafter, also simply referred to as a methacrylic acid ester) including methyl methacrylate (MMA).

A hydrocarbon group in the methacrylic acid ester may be an acyclic aliphatic hydrocarbon group such as a methyl group, an ethyl group, and a propyl group, an alicyclic hydrocarbon group, or an aromatic hydrocarbon group such as a phenyl group.

In view of transparency, the amount of a methacrylic acid ester monomer unit contained in the methacrylic resin (PM) is preferably 50 mass% or larger, more preferably 80 mass% or larger, and particularly preferably 90 mass% or larger, or may be 100 mass%.

The methacrylic resin (PM) may contain a structural unit derived from at least one type of a monomer other than the methacrylic acid ester. Examples of the other monomer(s) include acrylic acid esters such as methyl acrylate (MA), ethyl acrylate, n-propyl acrylate, isopropyl acrylate, n-butyl acrylate, isobutyl acrylate, tert-butyl acrylate, hexyl acrylate, 2-ethylhexyl acrylate, nonyl acrylate, decyl acrylate, dodecyl acrylate, stearyl acrylate, 2-hydroxyethyl acrylate, 2-hydroxypropyl acrylate, 4-hydroxybutyl acrylate, cyclohexyl acrylate, 2-methoxyethyl acrylate, 3-methoxybutyl acrylate, trifluoromethyl acrylate, trifluoroethyl acrylate, pentafluoroethyl acrylate, glycidyl acrylate, allyl acrylate, phenyl acrylate, toluyl acrylate, benzyl acrylate, isobornyl acrylate, and 3-dimethylaminoethyl acrylate. Among them, in view of availability, MA, ethyl acrylate, n-propyl acrylate, isopropyl acrylate, n-butyl acrylate, isobutyl acrylate, and tert-butyl acrylate are preferred. MA and ethyl acrylate are more preferred. Further, MA is particularly preferred. The amount of the structural unit derived from the other monomer(s) contained in the methacrylic resin (PM) is preferably 10 mass% or smaller, more preferably 5 mass% or smaller, and particularly preferably 2 mass% or smaller.

The methacrylic resin (PM) is preferably obtained by polymerizing at least one type of a methacrylic acid ester including MMA and, optionally, other monomers. When a plurality of types of monomers are used, the polymerization is usually performed after preparing a monomer mixture by mixing the plurality of types of monomers. The polymerization method is not limited to any particular methods. In view of productivity, a radical polymerization method such as a bulk polymerization method, a suspension polymerization method, a solution polymerization method, or an emulsion polymerization method is preferred.

The weight average molecular weight (Mw) of the methacrylic resin (PM) is preferably 40,000 to 500,000. When the molecular weight Mw is 40,000 or higher, the methacrylic-resin-containing layer has excellent abrasion resistance and excellent heat resistance. Further, when the molecular weight Mw is 500,000 or lower, the methacrylic-resin-containing layer has excellent moldability.

In this specification, "Mw" is a standard polystyrene equivalent molecular weight measured by using gel permeation chromatography (GPC) unless otherwise specified.

In this specification, the glass transition temperature of the methacrylic-resin-containing layer is represented by TgB. The temperature TgB is adjusted to 120 to 130°C in order to prevent a defect in external appearance such as surface roughness and cracking during the thermoforming such as a curved-surface forming process. If the temperature TgB is too low and hence the thermoforming temperature is too high relative to the temperature TgB, surface roughness may occur in the methacrylic-resin-containing layer during the thermoforming. If the temperature TgB is too high and hence the thermoforming temperature is too low relative to the temperature TgB, a defect in external appearance such as cracking may occur in the methacrylic-resin-containing layer.

Note that the methacrylic-resin-containing layer may be a layer composed of only at least one type of a methacrylic resin (PM), or may be a layer including at least one type of a methacrylic resin (PM) and at least one type of other components. The glass transition temperature of the methacrylic resin (PM) is preferably 115 to 135°C and more preferably 120 to 130°C. However, in the case where the methacrylic-resin-containing layer contains a plurality of components, as long as the temperature TgB of the whole layer is within the range of 120 to 130°C, the methacrylic-resin-containing layer may contain a component having a glass transition temperature outside the range of 115 to 135°C

### <Methacrylic Resin Composition (MR)>

The methacrylic-resin-containing layer may contain a methacrylic resin (PM) and, optionally, at least one type of other polymers.

For example, the methacrylic-resin-containing layer may be composed of a methacrylic resin composition (MR) (hereinafter, simply referred to as a resin composition (MR)) containing a methacrylic resin (PM) and an SMA resin (S).

In this specification, the "SMA resin" is a copolymer that contains a structural unit derived from at least one type of an aromatic vinyl compound and a structural unit derived from at least one type of an acid anhydride including maleic anhydride (MAH), and more preferably includes a structural unit derived from a methacrylic acid ester.

The methacrylic resin composition (MR) preferably contains 5 to 80 mass% of a methacrylic resin (PM) and 95 to 20 mass% of an SMA resin (S).

In order to, for example, adjust the temperature TgB to 120°C or higher, the content of the methacrylic resin (PM) in the resin composition (MR) is preferably 5 to 80 mass%, more preferably 5 to 55 mass%, and particularly preferably 10 to 50 mass%.

The SMA resin (S) is a copolymer containing a structural unit derived from at least one type of an aromatic vinyl compound and at least one type of an acid anhydride containing MAH.

Examples of the aromatic vinyl compound include styrene (St); nucleus alkyl-substituted styrene such as 2-methylstyrene, 3-methylstyrene, 4-methylstyrene, 4-ethylstyrene, and 4-tert-butylstyrene; and α-alkyl-substituted styrene such as α-methylstyrene and 4-methyl-α-methylstyrene. Among them, styrene (St) is preferred in view of availability. In view of transparency and moisture resistance of the resin composition (MR), the amount of the aromatic vinyl compound monomer unit contained in the SMA resin (S) is preferably 50 to 85 mass%, more preferably 55 to 82 mass%, and particularly preferably 60 to 80 mass%.

As the acid anhydride, at least maleic anhydride (MAH) may be used in view of availability. Further, other acid anhydrides such as citraconic anhydride and dimethyl maleic anhydride may be used as required. In view of transparency and heat resistance of the resin composition (MR), the amount of the acid anhydride (III) monomer unit contained in the SMA resin (S) is preferably 15 to 50 mass%, more preferably 18 to 45 mass%, and particularly preferably 20 to 40 mass%.

The SMA resin (S) may contain a structural unit derived from at least one type of a methacrylic acid ester monomer in addition to the aromatic vinyl compound and the acid anhydride. Examples of the methacrylic acid ester include MMA, ethyl methacrylate, propyl methacrylate, isopropyl methacrylate, n-butyl methacrylate, propyl methacrylate, isopropyl methacrylate, n-butyl methacrylate, isobutyl methacrylate, t-butyl methacrylate, 2-ethylhexyl methacrylate, cyclohexyl methacrylate, phenyl methacrylate, benzyl methacrylate, and 1-phenylethyl methacrylate. Among them, a methacrylic acid alkyl ester of which the carbon number of an alkyl group is 1 to 7 is preferred. In view of heat resistance and transparency of the SMA resin (S), MMA is particularly preferred. In view of bending workability and transparency of the extruded resin plate, the amount of the methacrylic acid ester monomer unit contained in the SMA resin (S) is preferably 1 to 35 mass%, more preferably 3 to 30 mass%, and particularly preferably 5 to 26 mass%. In such cases, the amount of the contained aromatic vinyl compound monomer unit is preferably 50 to 84 mass%, and the amount of the contained acid anhydride monomer unit is preferably 15 to 49 mass%.

The SMA resin (S) may have a structural unit derived from a monomer(s) other than the aromatic vinyl compound, the acid anhydride, and the methacrylic acid ester. As the other monomer(s), those described above in the description of the methacrylic resin (PM) may be used. The amount of the other monomer unit(s) contained in the SMA resin (S) is preferably 10 mass% or smaller, more preferably 5 mass% or smaller, and particularly preferably 2 mass% or smaller.

The SMA resin (S) is obtained by polymerizing the aromatic vinyl compound, the acid anhydride, optionally the methacrylic acid ester, and optionally other monomers. In this polymerization, the polymerization itself is usually performed after preparing a monomer mixture by mixing a plurality of types of monomers. The polymerization method is not limited to any particular methods. In view of productivity, a radical polymerization method such as a bulk polymerization method and a solution polymerization method is preferred.

The molecular weight Mw of the SMA resin (S) is preferably 40,000 to 300,000. When the molecular weight Mw is 40,000 or higher, the methacrylic-resin-containing layer has excellent abrasion resistance and excellent impact resistance. Further, when the molecular weight Mw is 300,000 or lower, the methacrylic-resin-containing layer has excellent moldability.

In order to, for example, adjust the temperature TgB to 120°C or higher, the content of the SMA resin (S) in the resin composition (MR) is preferably 20 to 95 mass%, more preferably 45 to 95 mass%, and particularly preferably 50 to 90 mass%.

The resin composition (MR) is obtained, for example, by mixing the methacrylic resin (PM) and the SMA resin (S). Examples of the mixing method include a melt mixing method and a solution mixing method. In the melt mixing method, melt-kneading may be performed under an atmosphere of an inert gas such as a nitrogen gas, an argon gas, and a helium gas as required by using a melt-kneader such as a single-screw or multi-screw kneader, an open roll, a Banbury mixer, and a kneader. In the solution mixing method, the methacrylic resin (A) and the SMA resin (S) may be mixed by dissolving them in an organic solvent such as toluene, tetrahydrofuran, and methyl ethyl ketone.

In one embodiment, the methacrylic-resin-containing layer may contain the methacrylic resin (PM) and optionally at least one type of other polymers.

In another embodiment, the methacrylic-resin-containing layer may be composed of the methacrylic resin composition (MR). Further, the methacrylic resin composition (MR) may contain the methacrylic resin (PM), the SMA resin (S), and optionally at least one type of other polymers.

There is no particular limitation on the other polymer(s). Examples of the other polymer(s) include other thermoplastic resins such as polyolefin such as polyethylene and polypropylene, polyamide, polyphenylene sulfide, polyether ether ketone, polyester, polysulfone, polyphenylene oxides, polyimide, polyetherimide, and polyacetal; and thermosetting resins such as phenolic resins, melamine resins, silicone resins, and epoxy resins. The amount of the other polymer(s) contained in the methacrylic-resin-containing layer is preferably 10 mass% or smaller, more preferably 5 mass% or smaller, and particularly preferably 2 mass% or smaller.

The methacrylic-resin-containing layer may contain various additives as required. Examples of the additives include antioxidants, thermal degradation preventing agents, ultraviolet absorbers, light stabilizers, lubricants, mold release agents, polymer processing aids, antistatic agents, flame retardants, dyes/pigments, light diffusing agents, matting agents, impact modifiers such as core-shell particles and block copolymers, and phosphors. The amount of the additive(s) may be determined as appropriate as long as the effect of the present invention is not impaired. For example, based on 100 pts.mass of the resin constituting the methacrylic-resin-containing layer, the amount of an antioxidant is preferably 0.01 to 1 pts.mass; the amount of an ultraviolet absorber is preferably 0.01 to 3 pts.mass; the amount of a light stabilizer is preferably 0.01 to 3 pts.mass; the amount of a lubricant is preferably 0.01 to 3 pts.mass; and the amount of a dye/pigment is preferably 0.01 to 3 pts.mass.

When other polymers and/or additives are contained in the methacrylic resin (PM), they may be added during or after the polymerization of the methacrylic resin (PM). When other polymers and/or additives are contained in the methacrylic resin composition (MR), they may be added during the polymerization of the methacrylic resin (PM) and/or the SMA resin (S), or during or after the mixing of these resins.

In view of stability of heat-melt molding, the melt flow rate (MFR) of the resin constituting the methacrylic-resin-containing layer is preferably 1 to 10 g/10 minutes, more preferably 1.5 to 7 g/10 minutes, and particularly preferably 2 to 4 g/10 minutes. In this specification, the MFR of the resin constituting the methacrylic-resin-containing layer is a value that is measured at a temperature of 230°C under a load of 3.8 kg by using a melt indexer unless otherwise specified.

### (Polycarbonate Containing Layer)

The polycarbonate containing layer contains at least one type of polycarbonates (PC). The polycarbonate (PC) is preferably obtained by copolymerizing at least one type of divalent phenol and at least one type of a carbonate precursor. Examples of the manufacturing method include an interfacial polymerization method in which an aqueous solution of divalent phenol and an organic solvent solution of a carbonate precursor are reacted at the interface, and a transesterification method in which divalent phenol and a carbonate precursor are reacted at a high temperature under a reduced pressure under a solvent-free condition.

Examples of the divalent phenol include 2,2-bis (4-hydroxyphenyl) propane (commonly known as bisphenol A), 1,1-bis (4-hydroxyphenyl) ethane, 1,1-bis (4-hydroxyphenyl) cyclohexane, 2,2-bis (3-methyl-4-hydroxyphenyl) propane, 2,2-bis (3,5-dimethyl-4-hydroxyphenyl) propane, bis (4-hydroxyphenyl) sulfide, and bis (4-hydroxyphenyl) sulfone. Among them, bisphenol A is preferred. Examples of the carbonate precursor include carbonyl halide such as phosgene; carbonate esters such as diphenyl carbonate; and haloformate such as dihaloformate of divalent phenol.

The molecular weight Mw of the polycarbonate (PC) is preferably 10,000 to 100,000, and more preferably 20,000 to 70,000. When the molecular weight Mw is 10,000 or higher, the polycarbonate containing layer has excellent impact resistance and excellent heat resistance. Further, when the molecular weight Mw is 100,000 or lower, the polycarbonate containing layer has excellent moldability.

Commercially available polycarbonate products may be used as the polycarbonate (PC). Examples include "Caliber (Registered Trademark)" and "SD Polyca (Registered Trademark)" manufactured by Sumika Styron Polycarbonate Limited, "Eupilon/Novarex (Registered Trademark)" manufactured by Mitsubishi Engineering Plastics Corporation "Taflon (Registered Trademark)" manufactured by Idemitsu Kosan Co., Ltd., and "Panlite (Registered Trademark)" manufactured by Teijin Chemicals Ltd.

In this specification, the glass transition temperature of the polycarbonate-containing layer is represented by TgA. The temperature TgA is 130 to 140°C for reducing the thermal change of the Re value of the extruded resin plate and for the property for the thermoforming such as a curved-surface forming process. If the temperature TgA is lower than 120°C, the in-plane retardation value (Re) may significantly decrease when the resin plate is exposed to a high temperature in the manufacturing process, in the thermoforming process, or under the operating environment. If the temperature TgA is higher than 150°C, it is necessary to raise the forming temperature in the thermoforming, thus arising a possibility that a defect in external appearance such as cracking may occur in the cured film formed on at least one surface of the resin plate.

Note that the polycarbonate-containing layer contains an alloy of polycarbonate and aromatic polyester. The glass transition temperature of polycarbonate (PC) is preferably 120 to 150°C and more preferably 130 to 140. However, in the case where the polycarbonate-containing layer contains a plurality of components, as long as the temperature TgA of the whole layer is within the range of 130 to 140°C, the polycarbonate-containing layer may contain a component having a glass transition temperature outside the range of 120 to 150°C

If the temperature difference (TgA-TgB) between the glass transition temperatures of the polycarbonate-containing layer and the methacrylic-resin-containing layer is excessively large on the negative side, a stress exerted to the methacrylic-resin-containing layer increases when the extruded resin plate is exposed to a high temperature. For example, the stress exerted to the methacrylic-resin-containing layer during the thermoforming increases, so that cracking may occur in the methacrylic-resin-containing layer. In order to reduce the stress exerted to the methacrylic-resin-containing layer when the extruded resin plate is exposed to a high temperature, e.g., to reduce the stress during the thermoforming and thereby preventing cracking in the methacrylic-resin-containing layer, the temperature difference TgA-TgB is -1°C or larger.

If the glass transition temperature difference (TgA-TgB) is too large on the positive side, the temperature of the methacrylic-resin-containing layer at which the thermoforming such as a curved-surface forming process can be performed may become much higher than the glass transition temperature (TgB) of the methacrylic-resin-containing layer. If the thermoforming temperature is too high relative to the temperature TgB, surface roughness or the like may occur and the surface quality may deteriorate. In order to prevent the surface property of the methacrylic-resin-containing layer from deteriorating when the extruded resin plate is exposed to a high temperature, the temperature difference TgA-TgB is 15°C or smaller.

The glass transition temperature of an ordinary polycarbonate (PC) is about 150°C. As an aspect in which a temperature TgA lower than the glass transition temperature in the case where polycarbonate (PC) is solely used can be achieved, for example, in which a temperature TgA of 120 to 145°C can be achieved, there are, for example, following two aspects. That is, there are a first aspect in which the polycarbonate-containing layer contains an alloy of polycarbonate (PC) and aromatic polyester, and a second aspect in which the polycarbonate-containing layer contains polycarbonate (PC) and a plasticizer or anti-plasticizer. In the second aspect, the polycarbonate-containing layer preferably contains 85 to 99 pts.mass of polycarbonate (PC) and 15 to 1 pts.mass of a plasticizer or anti-plasticizer. According to the present invention, at least the first aspect is employed.

### <Aromatic Polyester>

Examples of the aromatic polyester include a polycondensate of an aromatic dicarboxylic acid component and a diol component.

Typical examples of the aromatic dicarboxylic acid component include terephthalic acid, isophthalic acid, and naphthalene dicarboxylic acid. Examples of other dicarboxylic acid components include oxalic acid, malonic acid, succinic acid, adipic acid, azelaic acid, sebacic acid, neopentyl acid, isophthalic acid, naphthalene dicarboxylic acid, diphenyl ether dicarboxylic acid, and p-oxybenzoic acid. Only one of them may be used, or two or more of them may be used.

Typical examples of the diol component include ethylene glycol, diethylene glycol, triethylene glycol, and cyclohexane dimethanol. Examples of other diol components include propylene glycol, trimethylene glycol, tetramethylene glycol, hexamethylene glycol, diethylene glycol, neopentyl glycol, polyalkylene glycol, 1,4-cyclohexane dimethanol, glycerol, pentaerythritol, trimethylol, and methoxypolyalkylene glycol. Only one of them may be used, or two or more of them may be used.

Typical examples of the aromatic polyester include polyethylene terephthalate (PET), which is a polycondensate of terephthalic acid and ethylene glycol. Copolymerized polyesters using terephthalic acid and ethylene glycol, and other dicarboxylic acid components and/or other diol components are also preferred.

Other typical examples of the aromatic polyester include polybutylene terephthalate (PBT), which is a polycondensate of terephthalic acid or dimethyl terephthalate and 1,4-butanediol. Copolymerized polyesters using terephthalic acid and 1,4-butanediol, and other dicarboxylic acid components and/or other diol components are also preferred.

Among them, a copolymerized polyester (PCTG) in which cyclohexane dimethanol (1.4-CHDM) is used in combination with a part of ethylene glycol, preferably 55 to 75 mol% of ethylene glycol, and more preferably 50 to 75 mol% of ethylene glycol in PET, and a copolymerized polyester (PCTG) in which isophthalic acid is used in combination with a part of terephthalic acid, preferably 10 to 30 mol% of terephthalic acid in PBT, and a combination thereof are preferred. These copolymerized polyesters may be melted and blended with polycarbonate, so that they can be completely and mutually solved, and thereby converted into polymer alloys. Further, by this conversion into the polymer alloy, the glass transition temperature can be effectively lowered.

### <Plasticizer>

The plasticizer is not limited to any particular plasticizers. That is, examples of the plasticizer include phosphoric ester-based compounds such as trimethyl phosphate, triethyl phosphate, tributyl phosphate, tris(2-ethylhexyl) phosphate, triphenyl phosphate, tricresyl phosphate, trixylenyl phosphate, cresyl diphenyl phosphate, and 2-ethylhexyl diphenyl phosphate; phosphite-based compounds corresponding to the phosphoric ester-based compounds; phthalate ester-based compounds such as dimethyl phthalate, diethyl phthalate, dibutyl phthalate, bis(2-ethylhexyl phthalate), diisodecyl phthalate, butyl benzyl phthalate, diisononyl phthalate, and ethyl phthalylethyl glycolate; trimellitic acid ester-based compounds such as tris(2-ethylhexyl) trimelitate; aliphatic dibasic acid ester-based compounds such as dimethyl adipate, dibutyl adipate, diisobutyl adipate, bis(2-ethylhexyl) adipate, diisononyl adipate, diisodecyl adipate, diisodecyl adipate, bis(butyl diglycol) adipate, bis(2-ethylhexyl) azelate, dimethyl sebacate, dibutyl sebacate, bis(2-ethylhexyl) sebacate, and diethyl succinate; polyester-based compounds containing aliphatic dibasic acid units contained in the aliphatic dibasic acid ester-based compounds; ricinoleic acid ester-based compounds such as methylacetylricinolate; acetic ester-based compounds such as triacetin and octyl acetate; and sulfonamide-based compounds such as **n-**butylbenzene sulfonamide. Among them, phosphoric ester-based compounds, in particular, cresyl diphenyl phosphate (CDP), tricresyl phosphate (TCP) and the like are preferred because they have excellent compatibility with polycarbonate and they have excellent transparency after being mutually-solved.

### <Anti-plasticizer>

The anti-plasticizer is not limited to any particular anti-plasticizers, and industrially-available biphenyl compounds, terphenyl compounds, and the like can be used. The biphenyl compound is a compound in which two benzene rings are bonded, while the terphenyl compound is a compound in which three benzene rings are bonded. Polycaprolactone may also be used as the anti-plasticizer.

The polycarbonate containing layer may include at least one type of other polymers and/or various additives as required. As the other polymers and various additives, polymers and various additives similar to those described above in the description of the methacrylic-resin-containing layer may be used. The amount of the other polymer(s) contained in the polycarbonate containing layer is preferably 15 mass% or smaller, more preferably 10 mass% or smaller, and particularly preferably 5 mass% or smaller. The amount of the additive(s) may be determined as appropriate as long as the effect of the present invention is not impaired. Based on 100 pts.mass of the polycarbonate (PC), the amount of an antioxidant is preferably 0.01 to 1 pts.mass; the amount of an ultraviolet absorber is preferably 0.01 to 3 pts.mass; the amount of a light stabilizer is preferably 0.01 to 3 pts.mass; the amount of a lubricant is preferably 0.01 to 3 pts.mass; and the amount of a dye/pigment is preferably 0.01 to 3 pts.mass.

When other polymers and/or additives are added in the polycarbonate (PC), they may be added during or after the polymerization of the polycarbonate (PC).

In view of stability of heat-melt molding, the MFR of the resin constituting the polycarbonate containing layer is preferably 1 to 30 g/10 minutes, more preferably 3 to 20 g/10 minutes, and particularly preferably 5 to 10 g/10 minutes. In this specification, the MFR of the resin constituting the polycarbonate containing layer is a value that is measured at a temperature of 300°C under a load of 1.2 kg by using a melt indexer unless otherwise specified.

### (Thickness of Each Layer and Extruded Resin Plate)

The overall thickness (t) of the extruded resin plate used in the laminate for thermoforming according to the present invention is preferably 0.5 to 5.0 mm and more preferably 0.8 to 3.0 mm when it is used for a protective plate or the like for a flat panel such as a liquid crystal display, a touch panel display, or the like. If the extruded resin plate is too thin, the rigidity thereof may be insufficient. Further, if the extruded resin plate is too thick, it may hinder the reduction in weight of a flat panel such as a liquid crystal display, a touch panel display, or the like.

The thickness of the methacrylic-resin-containing layer is not limited to any particular thicknesses. However, it is preferably 40 to 200 µm, more preferably 50 to 150 µm, and particularly preferably 60 to 100 µm. If the thickness is too small, abrasion resistance may deteriorate, while if it is too large, impact resistance may deteriorate. The thickness of the polycarbonate-containing layer is preferably 0.3 to 4.9 mm and more preferably 0.6 to 2.9 mm.

### (Cured Film)

A laminate for thermoforming according to the present invention includes a cured film on at least one outermost surface thereof. The cured film can function as an abrasion resistant layer or a low reflective layer for improving visibility. The cured film may be formed by a known method (see Patent Literatures 4 and 5 and the like mentioned in the "Background Art" section).

The thickness of the cured film having an abrasion resistant property (a hard coat property) (i.e., the abrasion resistant layer) is preferably 2 to 30 µm and more preferably 5 to 20 µm. If the cured film is too thin, the surface hardness is insufficient. Further, if the cured film is too thick, cracks may occur due to bending that is performed during the manufacturing process.

The thickness of the low-reflectivity cured film (the low-reflective layer) is preferably 80 to 200 nm and more preferably 100 to 150 nm. If the cured film is too thin or too thick, its low reflection performance may become unsatisfactory.

### (Laminated Structure)

A laminate for thermoforming according to the present invention may include other resin layers, as long as the laminate for thermoforming includes an extruded resin plate in which a methacrylic-resin-containing layer is laminated on at least one surface of a polycarbonate-containing layer, and a cured film formed on at least one surface of the extruded resin plate. Examples of the laminated structure of the extruded resin plate included in the laminate for thermoforming according to the present invention includes: a two-layer structure of (a polycarbonate containing layer)/(a methacrylic-resin-containing layer); a three-layer structure of (a methacrylic-resin-containing layer)/(a polycarbonate containing layer)/(a methacrylic-resin-containing layer); a three-layer structure of (a methacrylic-resin-containing layer)/(a polycarbonate containing layer)/(another resin layer): and a three-layer structure of (another layer)/(a methacrylic-resin-containing layer)/(a polycarbonate containing layer).

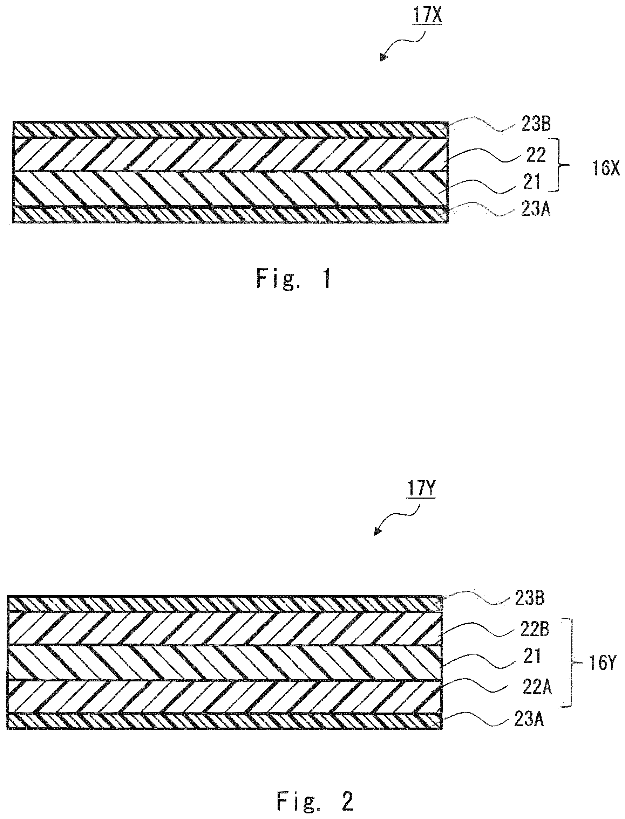

Figs. 1 and 2 are schematic cross sections of laminates for thermoforming according to the first and second embodiments in accordance with the present invention. In the figures, symbols 17X and 17Y indicate laminates for thermoforming and symbols 16X and 16Y indicate extruded resin plates. Symbols 21 indicate polycarbonate-containing layers and symbols 22, 22A and 22B indicate methacrylic-resin-containing layers. Further, symbols 23A and 23B indicate cured films. In the laminate for thermoforming 17X according to the first embodiment, the cured films 23A and 23B are respectively formed on both surfaces of the extruded resin plate 16X having a two-layer structure of (the polycarbonate-containing layer 21)/(the methacrylic resin containing layer 22). In the laminate for thermoforming 17Y according to the second embodiment, the cured films 23A and 23B are respectively formed on both surfaces of the extruded resin plate 16Y having a three-layer structure of (the first methacrylic-resin-containing layer 22A)/(the polycarbonate-containing layer 21)/(the second methacrylic-resin-containing layer 22B). Note that the design of the configuration of the extruded resin plate and the laminate for thermoforming can be changed as desired. For example, in the laminates for thermoforming according to the first and second embodiments, the cured film may be formed only on one surface of the extruded resin plate.

### [Method for Manufacturing Laminate for Thermoforming]

A preferred embodiment of the method for manufacturing a laminate for thermoforming having the above-described structure according to the present invention will be described hereinafter. A laminate for thermoforming according to the present invention can be manufactured by a publicly-known method and is preferably manufactured by a manufacturing method including coextrusion molding.

### (Step (X))

Each of resins constituting a polycarbonate containing layer and a methacrylic-resin-containing layer is heated and melted. Then, they are coextruded from a T-die having a wide discharge port in a molten state in a state of a thermoplastic resin laminate in which the methacrylic-resin-containing layer is laminated on at least one surface of the polycarbonate containing layer.

The molten resins for the polycarbonate containing layer and the methacrylic-resin-containing layer are preferably filtered in the molten state by using a filter before they are laminated. By molding these molten resins, which has been filtered in the molten state, into multiple layers, it is possible to obtain an extruded resin plate having few defects caused by foreign substances or gels. The filter material of the filter is selected as appropriate according to the use temperature, the viscosity, and the accuracy of the filtration. Examples of the filter material include a nonwoven fabric composed of glass fibers or the like; a sheet-like element made of phenolic-resin impregnated cellulose; a sintered sheet-like element of a metal-fiber nonwoven fabric; a sintered sheet-like element of metal powder; wire gauze; and a combination thereof. Among them, in view of heat resistance and durability, a filter in which a plurality of sintered sheet-like elements of metal-fiber nonwoven fabric are laminated is preferred. There is no particular limitation on the filtration accuracy of the filter. The filtration accuracy is preferably 30 µm or lower, more preferably 15 µm or lower, and particularly preferably 5 µm or lower.

Examples of the lamination method include a feed block method in which resins are laminated before being fed to a T-die, and a multi-manifold method in which resins are laminated inside a T-die. In order to improve smoothness of the interface between the layers of the extruded resin plate, the multi-manifold method is preferred.

The molten thermoplastic resin laminate coextruded from the T-die is cooled by using a plurality of cooling rolls. In the present invention, the molten thermoplastic resin laminate is cooled by using at least three cooling rolls arranged adjacent to each other by repeating the following operation a plurality of times from n=1 (n≥1), i.e., the operation including sandwiching the thermoplastic resin laminate between an nth cooling roll and an (n+1)th cooling roll, and winding the thermoplastic resin laminate around the (n+1)th cooling roll. For example, when three cooling rolls are used, the number of repetitions is two.

Examples of the cooling rolls include a metal roll, and an elastic roll including a metal thin film on its outer periphery (hereinafter, also referred to as a metal elastic roll). Examples of the metal roll include a drilled roll and a spiral roll. The surface of the metal roll may be a mirror surface, or may have a pattern, unevenness, or the like. The metal elastic roll may include, for example, a shaft roll made of stainless steel or the like, a metal thin film made of stainless steel or the like and covering the outer peripheral surface of the shaft roll, and a fluid contained between the shaft roll and the metal thin film. Because of the presence of the fluid, the metal elastic roll can have elasticity. The thickness of the metal thin film is preferably about 2 to 5 mm. The metal thin film preferably has a bending property and flexibility, and preferably has a seamless structure with no welding joint. Such a metal elastic roll including a metal thin film has excellent durability. Further, such a metal elastic roll may be easily used because, by making its metal thin film have a mirror surface, it can be handled in the same manner as an ordinary mirror surface roll. Alternatively, by providing a pattern, unevenness, or the like on the metal thin film, it becomes a roll that can transfer the pattern, the unevenness, or the like.

The extruded resin plate obtained after the cooling is pulled out by take-off rolls. The above-described coextruding, cooling, and pulling-out steps are performed in a continuous manner. Note that in this specification, in general, a material in a heated and melted state is expressed as a "thermoplastic resin laminate" and a solidified material is expressed as an "extruded resin plate". However, there is no clear boundary between them.

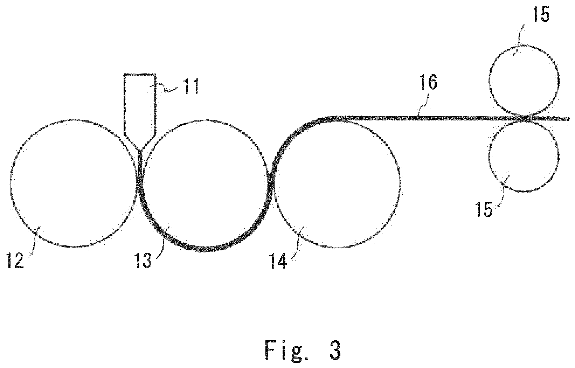

As an embodiment, Fig. 3 shows a schematic diagram of a manufacturing apparatus including a T-die 11, first to third cooling rolls 12 to 14, and a pair of take-off rolls 15. A thermoplastic resin laminate coextruded from the T-die 11 is cooled by using the first to third cooling rolls 12 to 14 and pulled out by the pair of take-off rolls 15. In the example shown in Fig. 3, the third cooling roll 14 is the "last cooling roll around which the thermoplastic resin laminate is wound (hereinafter also simply referred to as the last cooling roll)".

A fourth cooling roll and a subsequent cooling roll(s) may be disposed behind and adjacent to the third cooling roll 14. In such a case, the cooling roll on which the thermoplastic resin laminate is wound last becomes the "last cooling roll". Note that a conveying roll(s) may be disposed between the plurality of cooling rolls adjacent to each other and the take-off roll as desired. However, the conveying roll(s) is not included in the "cooling rolls".

Note that the configuration of the manufacturing apparatus may be changed as desired without departing from the spirit of the present invention.

In the manufacturing method according to the present invention, the overall temperature of the thermoplastic resin laminate (TT) at a place where it is separated from the last cooling roll (the third cooling roll in Fig. 3) is adjusted to a temperature 2°C lower than the glass transition temperature (TgA) of the polycarbonate-containing layer or higher. The temperature TT is preferably in a range between a temperature (TgA-2°C) and a temperature (TgA+20°C), more preferably in a range between a temperature (TgA+0.1°C) and a temperature (TgA+20°C), and particularly preferably in a range between a temperature (TgA+0.1°C) and a temperature (TgA+15°C).

If the temperature TT is too low relative to the temperature TgA, the shape of the last cooling roll (the third cooling roll in Fig. 3) may be transferred onto the extruded resin plate and hence warping thereof may increase. On the other hand, if the temperature TT is too high relative to the glass transition temperature of the part of the resin layer that is in contact with the last cooling roll (the third cooling roll in Fig. 3), the surface property of the extruded resin plate may deteriorate. Note that it is assumed that the temperature TT is measured by a method described in the [EXAMPLE] section described later.

The term "retardation" means a phase difference between light in the direction of the molecular main chain and light in the direction perpendicular thereto. In general, a polymer can have an arbitrary shape as it is heat-melt molded. However, it is known that molecules are oriented by a stress that occurs during the heating and cooling processes and hence retardation occurs. Therefore, in order to control the retardation, it is necessary to control the orientation of molecules. Molecules are orientated, for example, by a stress that occurs when the polymer is molded at or near its glass transition temperature. Note that in this specification, the term "retardation" means in-plane retardation unless otherwise specified.

It is possible to optimize a Re value of a molded extruded resin plate by optimizing manufacturing conditions and thereby controlling the orientation of molecules in the extrusion molding process, and to suppress thermal changes in the Re value by doing so. The Re value of at least a part of the extruded resin plate in the width direction is preferably 50 to 330 nm both before and after the heating, and a decreasing rate of the Re value of the extruded resin plate after the heating to the decreasing rate thereof before the heating is 35% or lower.

### <Relation between Circumferential Speed Ratio and Re Value>

In this specification, the "circumferential speed ratio" means a ratio of the circumferential speed of a given cooling roll other than the second cooling roll, or the take-off roll to that of the second cooling roll. The circumferential speed of the second cooling roll is represented by V2; the circumferential speed of the third cooling roll is represented by V3; and the circumferential speed of the take-up roll is represented by V4.

In the manufacturing method according to the present invention, the overall temperature of the thermoplastic resin laminate (TT) at the place where it is separated from the last cooling roll (the third cooling roll in Fig. 3) is adjusted to a temperature 2°C lower than the glass transition temperature (TgA) of the polycarbonate-containing layer or higher. Further, the temperature (TT) is preferably adjusted to a temperature in a range between a temperature (TgA-2°C) and a temperature (TgA+20°C), more preferably to a temperature in a range between a temperature (TgA+0.1°C) and a temperature (TgA+20°C), and particularly preferably to a temperature in a range between a temperature (TgA+0.1°C) and a temperature (TgA+15°C).

As a result of various evaluations on the relation between a circumferential speed ratio (V4/V2) of a circumferential speed of the take-off roll to that of the second cooling roll and the Re value, made by the inventors of the present application, it has been found that the higher the circumferential speed ratio (V4/V2) is, the more the Re value increases. It is presumed that this phenomenon occurs for the below-described reason. It is presumed that when the circumferential speed ratio of the take-off roll is increased and hence a large tensile stress is applied to the extruded resin plate under the condition that the temperature TT is adjusted to a temperature 2°C lower than the glass transition temperature (TgA) of the polycarbonate-containing layer or higher, preferably to a temperature in a range between a temperature (TgA-2°C) and a temperature (TgA+20°C), the temperature TT is in a temperature range in which molecules of the resin are likely to be oriented and hence the Re value increases.

Based on the above-described finding, it has been found that it is possible to control the Re value and the rate of the decreasing of the Re value after the heating by controlling the temperature TT to a temperature 2°C lower than the glass transition temperature (TgA) of the polycarbonate-containing layer or higher, preferably to a temperature in a range between a temperature (TgA-2°C) and a temperature (TgA+20°C), and adjusting the circumferential speed ratio (V4/V2) to a ratio within a suitable range. Specifically, in the manufacturing method according to the present invention, the circumferential speed ratio (V4/V2) is adjusted to a ratio no lower than 0.98 and lower than 1.0. If the circumferential speed ratio (V4/V2) is 1.0 or higher, the Re value may exceed 330 nm. If the circumferential speed ratio (V4/V2) is lower than 0.98, the Re value may become smaller than 50 nm. In order to optimize the Re value, the circumferential speed ratio (V4/V2) is more preferably 0.985 to 0.995.

### <Heating Condition for Evaluation of Decreasing Rate of Re Value>

The heating temperature for evaluating the decreasing rate of the Re value of the extruded resin plate can be a temperature that is not lower than 115°C and not higher than a temperature (TgA-5°C). The heating conditions may be, for example, a constant temperature that is not lower than 115°C and not higher than a temperature (TgA-5°C), and a constant time within a range of 10 to 60 minutes. For example, an evaluation can be performed by heating a test piece in an oven controlled at a set temperature of ±3°C for a predetermined time. Note that the minimum temperature of the above-described heating conditions is determined while taking into account of the heating temperature in the step of forming a cured film having abrasion resistance (a hard coat property) and/or a low reflectivity on the surface of the resin plate and the heating temperature in ordinary thermoforming such as a curved-surface forming process. At a heating temperature higher than the temperature (TgA-5°C), surface roughness may occur and/or cracking may occur in the cured film formed on at least one surface of the resin plate. Therefore, it is preferable that the Re value should be able to be maintained within a suitable range when the evaluation is performed by performing the heating under the above-described conditions.

According to the above-described manufacturing method in accordance with the present invention, it is possible to manufacture, by performing heating for 10 to 60 minutes at a constant temperature that is not lower than 115°C and not higher than the temperature (TgA-5°C), an extruded resin plate in which an Re value is 50 to 330 nm and preferably 80 to 250 nm in at least a part of the extruded resin plate in the width direction both before and after the heating, and a decreasing rate of the Re value after the heating from that before the heating is smaller than 35%, preferably less than 30%, more preferably less than 20%, and particularly preferably less than 15%.

### <Heating Condition for Thermoforming>

The shaping process such as a curved-surface forming process for the extruded resin plate can be performed through known thermoforming such as press forming, vacuum forming, and pneumatic forming. The thermoforming for the extruded resin plate is preferably performed for a resin plate in which a cured film is formed on at least one surface thereof.

The heating temperature for the thermoforming may be a temperature that is not lower than 110°C and not higher than a temperature (TgA-5°C), and preferably a temperature that is not lower than 115°C and not higher than the temperature (TgA-5°C). For example, the preheating temperature of the laminate may be a constant temperature that is not lower than 115°C and not higher than a temperature (TgA-5°C), and preferably a constant temperature that is not lower than 110°C and not higher than the temperature (TgA-5°C). The thermoforming temperature (the die temperature) may be a constant temperature that is not lower than 115°C and not higher than a temperature (TgA-5°C), and preferably a constant temperature that is not lower than 110°C and not higher than the temperature (TgA-5°C). Further, the heating time may be in a range of 10 to 60 minutes. For example, the laminate may be heated in an oven controlled to a predetermined preheating temperature of ±3°C for a predetermined time. Then, after being taken out from the oven, the laminate may be sandwiched between dies controlled to a predetermined thermoforming temperature of ±3°C and hot-pressed for a predetermined time.

The above-described heating conditions are determined while taking into account of heating conditions in ordinary thermoforming such as a curved-surface forming process. If the thermoforming temperature is lower than 110°C, a desired shape may not be obtained. Further, if the thermoforming temperature is higher than the temperature (TgA-5°C), surface roughness may occur and/or cracking may occur in the cured film formed on at least one surface of the resin plate. Therefore, it is preferable that a thermoformed article which has been formed into a desired shape and in which there is no defect in external appearance such as surface roughness and cracking should be able to be obtained when the thermoforming is performed under the above-described heating conditions.

### (Step (Y))

A cured film is formed on at least one surface of the extruded resin plate obtained after the step (X) by using a known method.

It is possible to form a cured film by coating a surface of the extruded resin plate with a curable composition, preferably a liquid curable composition, containing a thermosetting compound or an active-energy-ray-curable compound, and then curing the coating film by heating it or irradiating it with active energy rays. The active-energy-ray-curable compound is a compound having such a property that the compound is cured by irradiating it with active energy rays such as an electron beam and UV (UltraViolet) rays. Examples of the thermosetting composition include a polyorganosiloxane-based composition and a crosslinking-type acrylic composition. Examples of the active-energy-ray-curable composition include those containing a curable compound such as a monofunctional or polyfunctional acrylate-based monomer or oligomer, and a photo-polymerization initiator. The cured film may be formed by using a commercially-available hard coating agent.

In this way, the laminate for thermoforming according to the present invention is manufactured.

### (Thermoforming)

It is possible to perform thermoforming for the laminate for thermoforming according to the present invention manufactured by the above-described method, and thereby to perform a shaping process such as a curved-surface forming process therefor. The laminate for thermoforming according to the present invention is suitable as one for thermoforming. As the thermoforming, known methods such as press forming, vacuum forming, and pneumatic forming can be performed.

Since the laminate for thermoforming according to the present invention includes an extruded resin plate in which a methacrylic-resin-containing layer is laminated on at least one surface of a polycarbonate-containing layer, the laminate is excellent in luster, abrasion resistance, and impact resistance.

In the laminate for thermoforming according to the present invention, the glass transition temperature (TgA) of the polycarbonate-containing layer is 130 to 140°C, and the glass transition temperature (TgB) of the methacrylic-resin-containing layer is 120 to 130°C. Further, the difference TgA-TgB is -1 to +15°C. By defining the glass transition temperatures as described above, it is possible to prevent the Re value from decreasing under a high-temperature environment, and prevent a defect in external appearance such as surface roughness and cracking during the thermoforming such as the curved-surface forming process.

### [Use]

The laminate for thermoforming according to the present invention is suitable as a protective plate or the like which is subjected to a shaping process such as a curved-surface forming process and is used for a flat panel display such as a liquid crystal display or for a touch panel or the like. For example, the extruded resin plate is suitable as a protective plate for a flat panel display such as a liquid crystal display, a touch panel or the like used in ATMs of financial institutions such as banks; vending machines; and digital information devices such as mobile phones (including smart phones), portable information terminals (PDAs) such as tablet-type personal computers, digital audio players, portable game machines, copying machines, facsimile machines, and car navigation systems.

### [Example]

Examples according to the present invention, reference examples and comparative examples will be described.

### [Evaluation Items and Evaluation Methods]

The evaluation items and the evaluation methods are as follows.

### (Copolymerization Composition of SMA Resin (S))

Copolymerization composition of an SMA resin (S) was determined by a ¹³C-NMR method by using a nuclear magnetic resonance apparatus ("GX-270" manufactured by JEOL Ltd.) according to the following procedure.

A sample solution was prepared by dissolving 1.5 g of an SMA resin (S) in 1.5 ml of deuterated chloroform and a ¹³C-NMR spectrum was measured in a room-temperature environment under the condition that the number of accumulations was 4,000 to 5,000. As a result, the following values were obtained.
- [Integrated intensity of carbon peak (around 127, 134, 143 ppm) of benzene ring (carbon number 6) in styrene unit]/6
- [Integrated intensity of carbon peak (around 170 ppm) at carbonyl site (carbon number 2) in maleic anhydride unit]/2
- [Integrated intensity of carbon peak (around 175 ppm) at carbonyl site (carbon number 1) in MMA unit]/1

From the area ratio among the above-shown values, a molar ratio among the styrene unit, the maleic anhydride unit, and the MMA unit in the sample was determined. The mass composition of each monomer unit in the SMA resin (S) was determined from the obtained molar ratio and the mass ratio of that monomer unit (styrene unit: maleic anhydride unit: MMA unit = 104: 98: 100).

### (Weight Average Molecular Weight (Mw))

The molecular weight Mw of the resin was determined by a GPC method according to the following procedure. Tetrahydrofuran was used as an eluent. Further, two "TSKgel SuperMultipore HZM-M" and one "SuperHZ4000" manufactured by Tosoh Corporation were connected in series and used as a column. HLC-8320 (product number) equipped with a differential refractive index detector (an RI detector) manufactured by Tosoh Corporation was used as a GPC apparatus. A sample solution was prepared by dissolving 4 mg of a resin in 5 ml of tetrahydrofuran. The temperature of a column oven was set to 40°C. Further, a chromatogram was measured by injecting 20 µl of the sample solution at the rate of 0.35 ml/min as an eluent flow. Ten samples of polystyrene standards having molecular weights in a range of 400 to 5,000,000 were measured by the GPC and a calibration curve indicating a relation between retention time and molecular weights was created. The molecular weight Mw was determined based on this calibration curve.

### (Glass Transition Temperature of Each Layer)

The glass transition temperature of each layer was measured by putting 10 mg of a constituent resin (a composition) in an aluminum pan and using a differential scanning calorimeter ("DSC-50" manufactured by Rigaku Corporation). After performing a nitrogen substitution for 30 minutes or longer, in a nitrogen gas flow of 10 ml/min, primarily, the temperature was raised from 25°C to 200°C at a rate of 20°C/min, maintained at the raised temperature for 10 minutes, and cooled to 25°C (primary scanning). Next, the temperature was raised to 200°C at a rate of 10°C/min (secondary scanning). The glass transition temperature was calculated from a result obtained by the secondary scanning by a midpoint method. Note that when a plurality of Tg data are obtained for a resin composition containing at least two types of resins, a value derived from the resin constituting the main component was used as Tg data.

### (Overall Temperature of Thermoplastic Resin Laminate (TT))

The overall temperature of the thermoplastic resin laminate (TT) at the place where it was separated from the last cooling roll (specifically, the third cooling roll) was measured by using an infrared thermometer. The measurement point was the center of the extruded resin plate in the width direction.

### (In-plane Retardation (Re) Value of Extruded Resin Plate and Its Decreasing Rate)

A 100 mm square test piece was cut out from the extruded resin plate by using a running saw. This test piece was heated for 60 min in an oven whose temperature was maintained at the temperature described in Tables 2-1 to 2-3 under "Heating conditions" of "Evaluation conditions and evaluation results for Re value of extruded resin plate". The Re value was measured both before and after the heating as follows. The test piece was left as it is in an environment of 23°C ±3°C for 10 minutes or longer and then the Re value was measured by using "WPA-100(-L)" manufactured by Photonic Lattice, Inc. The measured point was the center of the test piece. The decreasing rate of the Re value between before and after the heating was determined from the below-shown Expression. 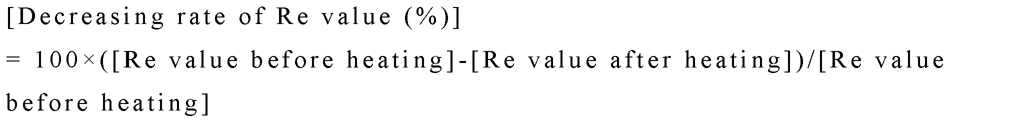 [Decreasing rate of Re value (%)] = 100×([Re value before heating]-[Re value after heating])/[Re value before heating]

### (Amount of Warping of Extruded Resin Plate)

A rectangular test piece having a short side of 100 mm and a long side of 200 mm was cut out from an extruded resin plate. Note that the short-side direction was parallel to the extruding direction and the long-side direction was perpendicular to the extruding direction (i.e., parallel to the width direction). The obtained test piece was placed on a glass surface plate so that the upper surface in the extrusion molding became the uppermost surface, and was left as it is in an environment of a temperature of 23°C and a relative humidity of 50% for 24 hours. After that, the maximum value of the gap between the test piece and the surface plate was measured by using a feeler gauge, and the measured maximum value was used as an initial amount of warping. Next, in an environmental test apparatus, the test piece was placed on a glass surface plate so that the upper surface in the extrusion molding became the uppermost surface. Then the placed test piece was left as it is in an environment of a temperature of 85°C and a relative humidity of 85% for 72 hours and then left as it is in an environment of a temperature of 23°C and a relative humidity of 50% for 4 hours. After that, an amount of warping was measured in the same manner as the initial stage and the obtained value was used as amount of warping after the high-temperature and high-humidity state. Note that in the test piece, which was placed on the surface plate so that the upper surface in the extrusion molding became the uppermost surface, the sign of the amount of warping was defined as "positive" when upward convex warping occurred and was defined as "negative" when downward convex warping occurred.

### (Evaluation of Laminate for Thermoforming)

A rectangular test piece having a short side of 100 mm and a long side of 200 mm was cut out from the obtained laminate for thermoforming by using a running saw. The test piece was heated in an oven controlled to a constant temperature in a range of 105°C±3°C to 150°C±3°C for 15 minutes (preheating). Next, the preheated test piece was sandwiched between a pair of upper and lower dies for a curved-surface forming process, controlled to the same temperature as that of the oven, and hot-pressed for 10 minutes (thermoforming). One of the upper and lower dies had a concavely-curved surface with a radius of curvature of 50 mm in cross section, and the other die had a convexly-curved surface with a radius of curvature of 50 mm that was opposed to the concavely-curved surface. Further, the test piece was set so that the concavely-curved surface, the test piece, and the convexly-curved surface were in tight contact with one another. After the thermoforming was completed, the test piece was taken out from the pair of upper and lower dies, and evaluated according to the below-shown criteria.
<Thermoforming Property (Shaping Property)>
   ∘ (Good): The radius of curvature of the test piece after the thermoforming was 90% of the radius of curvature of the dies or higher.
   × (Defective): The radius of curvature of the test piece after the thermoforming was lower than 90%.
<Surface Quality>
   ∘ (Good): The surface state of the test piece after the thermoforming was not changed from that before the thermoforming, and was excellent.
   × (Defective): The surface state of the test piece after the thermoforming deteriorated from that before the thermoforming, and surface roughness was observed.
<Presence/Absence of Crack in Methacrylic-resin-containing Layer>
   Absent (Good): No crack was observed in the methacrylic-resin-containing layer after the thermoforming.
   Present (Defective): A crack(s) was observed in the methacrylic-resin-containing layer after the thermoforming.
<Presence/Absence of Crack in Cured Film>
   Absent (good): No crack was observed in the cured film after the thermoforming.
   Present (Defective): A crack(s) was observed in the cured film after the thermoforming.

### [Material]

Used materials were as follows.
<Methacrylic Resin (PM)>
   (PM1) Polymethyl methacrylate (PMMA), "Parapet (Registered Trademark) HR" manufactured by Kuraray Co., Ltd. (MFR at temperature 230°C under 3.8 kg load = 2.0 g/10 min, Tg = 115°C).
   (PM2) Polymethyl methacrylate (PMMA), "Parapet (Registered Trademark) HMH-2" manufactured by Kuraray Co., Ltd. (Tg = 120°C).
<SMA Resin (S)>
   (S1) An SMA resin (styrene-maleic anhydride-MMA copolymer, styrene unit/maleic anhydride unit/MMA unit (mass ratio) = 56/18/26, Mw = 150,000, Tg = 138°C) was obtained according to a method described in International Patent Publication No. WO2010/013557.
<Methacrylic-resin-containing resin composition (MR)>

The below-shown five types of methacrylic-resin-containing resin compositions (MR) were obtained by mixing methacrylic resin (PM1) and SMA resin (S1). Note that the SMA ratio indicates a loading ratio (mass%) of the SMA resin (S1) to the total amount of the resin composition.
(MR1) (PM1)/(S1) resin composition (SMA ratio 20 mass%, Tg = 120°C),
(MR2) (PM1)/(S1) resin composition (SMA ratio 30 mass%, Tg = 122°C),
(MR3) (PM1)/(S1) resin composition (SMA ratio 50 mass%, Tg = 127°C),
(MR4) (PM1)/(S1) resin composition (SMA ratio 70 mass%, Tg = 132°C),
(MR5) (PM1)/(S1) resin composition (SMA ratio 80 mass%, Tg = 135°C).

### <Polycarbonate (PC)>

(PC1) "SD Polyca (Registered Trademark) PCX" manufactured by Sumika Styron Polycarbonate Limited (MFR at temperature 300°C under 1.2 kg load = 6.7 g/10 min, Tg = 150°C).

### <Polycarbonate-containing resin Composition (PCR)>

The below-shown five types of polycarbonate-containing resin compositions (PCR) were obtained by mixing the above-described polycarbonate (PC1) and a commercially-available polycyclohexane dimethylene terephthalate. Note that the P ratio indicates a loading ratio (mass%) of polycyclohexane dimethylene terephthalate to the total amount of the resin composition.
(PCR1) polycarbonate-containing resin composition (P ratio 5 mass%, Tg = 145°C),
(PCR2) polycarbonate-containing resin composition (P ratio 25 mass%, Tg = 131°C),
(PCR3) polycarbonate-containing resin composition (P ratio 34 mass%, Tg = 125°C),
(PCR4) polycarbonate-containing resin composition (P ratio 39 mass%, Tg = 120°C),
(PCR5) polycarbonate-containing resin composition (P ratio 45 mass%, Tg = 115°C).

### <Polycarbonate-containing resin composition (PCR)>

The below-shown plasticizer or anti-plasticizer was added to the above-described polycarbonate (PC1), and the temperature Tg was adjusted to the below-shown temperature.
Plasticizer: tricresyl phosphate (TCP manufactured by Daihachi Chemical Industry Co., Ltd.),
Anti-plasticizer: metaterphenyl (manufactured by Nippon Steel Chemical Co., Ltd.).
(PCR6) polycarbonate-containing resin composition (5 phr of TCP was added, Tg = 130°C),
(PCR7) polycarbonate-containing resin composition (3 phr of metaterphenyl was added, Tg = 132°C).

### [Example 1 (reference example)] (Manufacture of Extruded Resin Plate)

Extruded resin plates were formed by using a manufacturing apparatus as shown in Fig. 3.

A methacrylic-resin-containing resin composition (MR4) melted by using a 65 mmφ single-screw extruder (manufactured by Toshiba Machine Co., Ltd.) and a polycarbonate (PC1) melted by using a 150 mmφ single-screw extruder (manufactured by Toshiba Machine Co., Ltd.) were laminated through a multi-manifold-type die, and a molten thermoplastic resin laminate was coextruded from a T-die.

Next, the molten thermoplastic resin laminate was cooled by sandwiching the laminate between a first cooling roll and a second cooling roll adjacent to each other, winding the laminate around the second cooling roll, sandwiching the laminate between the second cooling roll and a third cooling roll, and winding the laminate around the third cooling. An extruded resin plate obtained after the cooling was pulled out by a pair of take-off rolls. Note that the above-described processes were performed so that the polycarbonate-containing layer was brought into contact with the third cooling roll.

The overall temperature of the thermoplastic resin laminate (TT) at the place where the laminate was separated from the third cooling roll was adjusted to 160°C by controlling the temperatures of the second and third cooling rolls. The circumferential speed ratio (V4/V2) of the second cooling roll to the take-off roll was adjusted to 0.99, and the circumferential speed ratio (V3/V2) of the second cooling roll to the third cooling roll was adjusted to 1.00.

In this way, an extruded resin plate having a two-layered structure having a laminated structure of (methacrylic-resin-containing layer (surface layer 1))/(polycarbonate-containing layer (surface layer 2)) was obtained. The thickness of the methacrylic-resin-containing layer of the extruded resin plate was 0.08 mm, and the thickness of the polycarbonate-containing layer thereof was 2.92 mm. Further, the overall thickness of the extruded resin plate was 2 mm. Tables 1-1 and 2-1 show main manufacturing conditions for extruded resin plates and evaluation results of the obtained extruded resin plates. Note that manufacturing conditions that are not shown in the tables are in common in the below-shown examples and comparative examples.

A laminate for thermoforming was obtained by forming a cured film having a thickness of 8 µm on each of both surfaces of the obtained extruded resin plate. The cured film was formed by coating the surface of the extruded resin plate with a UV-curable hard coat liquid (UV-1700B manufactured by The Nippon Synthetic Chemical Industry Co., Ltd.) and curing the coated film by irradiating it with UV rays. The thermoforming of the obtained laminate for thermoforming was evaluated. Table 2-1 shows thermoforming conditions and evaluation results.

### [Examples 2 to 12 (Examples 2, 4, 5, 11 and 12 are reference examples), and Comparative Examples 1 and 2]

An extruded resin plate having a two-layer structure having a laminated structure of (a methacrylic-resin-containing layer (surface layer 1))/(a polycarbonate-containing layer (surface layer 2)) was obtained in the same manner as in the case of the Example 1 except that the composition of the methacrylic-resin-containing layer, the composition of the polycarbonate-containing layer, and the manufacturing conditions were changed as shown in Tables 1-1 and 1-3. Note that the overall thickness of the extruded resin plate was adjusted by changing the thickness of the polycarbonate-containing layer while maintaining the thickness of the methacrylic-resin-containing layer unchanged. The evaluation results of the extruded resin plates obtained in each example are shown in Tables 2 -1 and 2 -3.

Similarly to the Example 1 (reference example), a laminate for thermoforming was obtained by forming a cured film on each of both surfaces of the obtained extruded resin plate. Further, thermoforming thereof was evaluated. Tables 2-1 and 2-3 show thermoforming conditions and evaluation results.

### [Example 13 (reference example)]

Extruded resin plates were formed by using the manufacturing apparatus as shown in Fig. 3. A methacrylic resin (PM1) melted by using a 65 mmφ single-screw extruder, a polycarbonate-containing resin composition (PCR3) melted by using a 150 mmφ single-screw extruder, and a methacrylic resin (PM1) melted by using a 65 mmφ single-screw extruder were laminated through a multi-manifold-type die, and a molten thermoplastic resin laminate having a three-layered structure was coextruded from a T-die. Further, the coextruded thermoplastic resin laminate was cooled by using first to third cooling rolls, and an extruded resin plate obtained after the cooling was pulled out by a pair of take-off rolls.

In this way, an extruded resin plate having a three-layered structure having a laminated structure of (a methacrylic-resin-containing layer (surface layer 1))/(a polycarbonate-containing layer (inner layer))/(a methacrylic-resin-containing layer (surface layer 2)) was obtained. The compositions and the thicknesses of the two methacrylic-resin-containing layers were made the same as (equal to) each other. The thickness of each of the two methacrylic-resin-containing layers of the extruded resin plate was 0.08 mm, and the thickness of the polycarbonate-containing layer thereof was 2.84 mm. Further, the overall thickness of the extruded resin plate was 2 mm. Tables 1-2 and 2-2 show manufacturing conditions for extruded resin plates and evaluation results of obtained extruded resin plates.

Similarly to the Example 1 (reference example), a laminate for thermoforming was obtained by forming a cured film on each of both surfaces of the obtained extruded resin plate. Further, thermoforming thereof was evaluated. Table 2-2 shows thermoforming conditions and evaluation results.

### [Examples 14 to 18 (reference examples), and Comparative Examples 3 and 4]

An extruded resin plate having a three-layer structure having a laminated structure of (a methacrylic-resin-containing layer (surface layer 1))/(a polycarbonate-containing layer (inner layer)/(a methacrylic-resin-containing layer) (surface layer 2)) was obtained in the same manner as in the Example 13 except that the composition of the methacrylic-resin-containing layers, the composition of the polycarbonate-containing layer, and the manufacturing conditions were changed as shown in Tables 1-2 and 1-3. Note that the overall thickness of the extruded resin plate was adjusted by changing the thickness of the polycarbonate-containing layer while maintaining the thickness of the methacrylic-resin-containing layers unchanged. The evaluation results of the extruded resin plates obtained in each example are shown in Tables 2 -2 and 2 -3.

Similarly to the Example 1 (reference example), a laminate for thermoforming was obtained by forming a cured film on each of both surfaces of the obtained extruded resin plate. Further, thermoforming thereof was evaluated. Tables 2-2 and 2-3 show thermoforming conditions and evaluation results.

### [Table 1-1]

**[Table 1-1]**

| | Layered structure of extruded resin plate | | | Total thickness (mm) | TgA (°C) | TgB (°C) | TgA-TgB (°C) | TT (°C) | V3/V2 | V4/V2 |
|---|---|---|---|---|---|---|---|---|---|---|
| | Suerface layer 1 | Inner layer | Suerface layer 2 | | | | | | | |
| Example 1 | Methacrylic-resin-containing layer (MR4) (SMA ratio 70 mass%) | - | PC1 | 2.0 | 150 | 132 | 18 | 160 | 1.00 | 0.99 |
| Example 2 | Methacrylic-resin-containing layer (MR3) (SMA ratio 50 mass%) | - | PCR 1 | 2.0 | 145 | 127 | 18 | 160 | 1.00 | 0.99 |
| Example 3 | Methacrylic-resin-containing layer (PM2) | - | PCR 2 | 2.0 | 131 | 120 | 11 | 150 | 1.00 | 0.99 |
| Example 4 | Methacrylic-resin-containing layer (PM1) | - | PCR 3 | 2.0 | 125 | 115 | 10 | 135 | 1.00 | 0.99 |
| Example 5 | Methacrylic-resin-containing layer (PM1) | - | PCR 4 | 2.0 | 120 | 115 | 5 | 135 | 1.00 | 0.99 |
| Example 6 | Methacrylic-resin-containing layer (PM2) | - | PCR 2 | 1.0 | 131 | 120 | 11 | 150 | 1.00 | 0.99 |
| Example 7 | Methacrylic-resin-containing layer (PM2) | - | PCR 2 | 0.5 | 131 | 120 | 11 | 150 | 1.00 | 0.99 |
| Example 8 | Methacrylic-resin-containing layer (MR1) (SMA ratio 20 mass%) | - | PCR 2 | 2.0 | 131 | 120 | 11 | 150 | 1.00 | 0.99 |
| Example 9 | Methacrylic-resin-containing layer (MR2) (SMA ratio 30 mass%) | - | PCR 2 | 2.0 | 131 | 122 | 9 | 150 | 1.00 | 0.99 |
| Example 10 | Methacrylic-resin-containing layer (MR3) (SMA ratio 50 mass%) | - | PCR 2 | 2.0 | 131 | 127 | 4 | 150 | 1.00 | 0.99 |
| Example 11 | Methacrylic-resin-containing layer (MR4) (SMA ratio 70 mass%) | - | PCR 2 | 2.0 | 131 | 132 | -1 | 150 | 1.00 | 0.99 |
| Example 12 | Methacrylic-resin-containing layer (MR5) (SMA ratio 80 mass%) | - | PCR 2 | 2.0 | 131 | 135 | -4 | 150 | 1.00 | 0.99 |

**[Table 1-2]**

| | Layered structure of extruded resin plate | | | Total thickness (mm) | TgA (°C) | **TgB** (°C) | TgA-TgB (°C) | TT (°C) | V3/V2 | V4/V2 |
|---|---|---|---|---|---|---|---|---|---|---|
| | Suerface layer 1 | Inner layer | Suerface layer 2 | | | | | | | |
| Example 13 | Methacrylic-resin-containing layer (PM1) | PCR 3 | Same as surface layer 1 | 2.0 | 125 | 115 | 10 | 135 | 1.00 | 0.99 |
| Example 14 | Methacrylic-resin-containing layer (MR4) (SMA ratio 70 mass%) | PCR 2 | Same as surface layer 1 | 2.0 | 131 | 132 | -1 | 135 | 1.00 | 0.99 |
| Example 15 | Methacrylic-resin-containing layer (MR5) (SMA ratio 80 mass%) | PCR 2 | Same as surface layer 1 | 2.0 | 131 | 135 | -4 | 140 | 1.00 | 0.99 |
| Example 16 | Methacrylic-resin-containing layer (MR4) (SMA ratio 70 mass%) | PCR 2 | Same as surface layer 1 | 3.0 | 131 | 132 | -1 | 150 | 1.00 | 0.99 |
| Example 17 | Methacrylic-resin-containing layer (MR4) (SMA ratio 70 mass%) | PCR 6 | Same as surface layer 1 | 2.0 | 130 | 132 | -2 | 150 | 1.00 | 0.99 |
| Example 18 | Methacrylic-resin-containing layer (MR4) (SMA ratio 70 mass%) | PCR 7 | Same as surface layer 1 | 2.0 | 132 | 132 | 0 | 150 | 1.00 | 0.99 |

**[Table 1-3]**

| | Layered structure of extruded resin plate | | | Total thickness (mm) | TgA (°C) | TgB (°C) | TgA-TgB (°C) | TT (°C) | V3/V2 | V4/V2 |
|---|---|---|---|---|---|---|---|---|---|---|
| | Suerface layer 1 | Inner layer | Suerface layer 2 | | | | | | | |
| Comparative example 1 | Methacrylic-resin-containing layer (PM1) | - | PC1 | 2.0 | 150 | 115 | 35 | 165 | 1.00 | 0.99 |
| Comparative example 2 | Methacrylic-resin-containing layer (PM1) | - | PCR 5 | 2.0 | 115 | 115 | 0 | 125 | 1.00 | 0.99 |
| Comparative example 3 | Methacrylic-resin-containing layer (MR3) (SMA ratio 50 mass%) | PC1 | Same as surface layer 1 | 2.0 | 150 | 127 | 23 | 160 | 1.00 | 0.99 |
| Comparative example 4 | Methacrylic-resin-containing layer (MR2) (SMA ratio 30 mass%) | PCR 5 | Same as surface layer 1 | 2.0 | 115 | 122 | -7 | 120 | 1.00 | 0.99 |

**[Table 2-1]**

| | Evaluation conditions and evaluation results for Re value of extruded resin plate | | | | | Evaluation results for warping of extruded resin plate (mm) | | Thennofonning conditions and eveluation results for laminate for thermoforming | | | | | | | |
|---|---|---|---|---|---|---|---|---|---|---|---|---|---|---|---|
| | Heating condtions | | Re (nm) | | Decrea sing rate of Re | Initial | After high temperature and high humidity (85°C85RH) | Preheating conditions for laminate | | Thermoformin g condtions | | Thermalformin g property (Shape processing property) | Surface property | Presence/absenc e of crack in methacrylic-resin-containing layer | Presence/abse nce of crack in cured film |
| | Temper ature (°C) | Time (min) | Before heating | After heating | | | | Tempe rature (°C) | Time (min) | Temper ature (°C) | Time (min) | | | | |
| Example 1 | 145 | 60 | 135 | 90 | 33% | +0.2 | +0.2 | 145 | 15 | 145 | 10 | ○ | ○ | Absent | Absent |
| Example 2 | 135 | 60 | 160 | 125 | 22% | +0.2 | -0.3 | 135 | 15 | 135 | 10 | ○ | ○ | Absent | Absent |
| Example 3 | 120 | 60 | 200 | 150 | 25% | +0.2 | -0.6 | 120 | 15 | 120 | 10 | ○ | ○ | Absent | Absent |
| Example 4 | 115 | 60 | 140 | 105 | 25% | +0.3 | -0.9 | 115 | 15 | 115 | 10 | ○ | ○ | Absent | Absent |
| Example 5 | 115 | 60 | 165 | 110 | 33% | +0.3 | -0.9 | 110 | 15 | 110 | 10 | ○ | ○ | Absent | Absent |
| Example 6 | 120 | 60 | 190 | 145 | 24% | +0.3 | -0.4 | 120 | 15 | 120 | 10 | ○ | ○ | Absent | Absent |
| Example 7 | 120 | 60 | 185 | 140 | 24% | +0.4 | -0.4 | 120 | 15 | 120 | 10 | ○ | ○ | Absent | Absent |
| Example 8 | 120 | 60 | 205 | 160 | 22% | +0.1 | -0.4 | 120 | 15 | 120 | 10 | ○ | ○ | Absent | Absent |
| Example 9 | 120 | 60 | 210 | 155 | 26% | +0.1 | -0.4 | 120 | 15 | 120 | 10 | ○ | ○ | Absent | Absent |
| Example 10 | 120 | 60 | 200 | 155 | 23% | +0.1 | -0.3 | 120 | 15 | 120 | 10 | ○ | ○ | Absent | Absent |
| Example 11 | 125 | 60 | 195 | 130 | 33% | +0.1 | +0.1 | 125 | 15 | 125 | 10 | ○ | ○ | Absent | Absent |
| Example 12 | 120 | 60 | 200 | 145 | 28% | +0.1 | +0.1 | 120 | 15 | 120 | 10 | ○ | ○ | Absent | Absent |

**[Table 2-2]**

| | Evaluation conditions and evaluation results for Re value of extruded resin plate | | | | | Evaluation results for warping of extruded resin plate (mm) | | Thermoforming conditions and eveluation results for laminate for thermoforming | | | | | | | |
|---|---|---|---|---|---|---|---|---|---|---|---|---|---|---|---|
| | Heating condtions | | Re (nm) | | Decrea sing rate of Re | Initial | After high temperature and high humidity (85°C85RH) | Preheating conditions for laminate | | Thermoformi ng condtions | | Thermalformin g property (Shape processing property) | Surface property | Presence/absenc e of crack in methacrylic-resin-containing layer | Presence/abse nce of crack in cured film |
| | Temper ature (°C) | Time (min) | Before heating | After heating | | | | Temper ature (°C) | Time (min) | Tempe rature (°C) | Time (min) | | | | |
| Example 13 | 115 | 60 | 130 | 95 | 27% | +0.1 | +0.1 | 115 | 15 | 115 | 10 | ○ | ○ | Absent | Absent |
| Example 14 | 125 | 60 | 110 | 75 | 32% | +0.1 | +0.1 | 125 | 15 | 125 | 10 | ○ | ○ | Absent | Absent |
| Example 15 | 125 | 60 | 135 | 90 | 33% | +0.1 | +0.1 | 125 | 15 | 125 | 10 | ○ | ○ | Absent | Absent |
| Example 16 | 125 | 60 | 210 | 140 | 33% | 0.0 | 0.0 | 125 | 15 | 125 | 10 | ○ | ○ | Absent | Absent |
| Example 17 | 125 | 60 | 210 | 140 | 33% | +0.1 | +0.1 | 125 | 15 | 125 | 10 | ○ | ○ | Absent | Absent |
| Example 18 | 125 | 60 | 195 | 135 | 31% | +0.1 | +0.1 | 125 | 15 | 125 | 10 | ○ | ○ | Absent | Absent |

**[Table 2-3]**

| | Evaluation conditions and evaluation results for Re value of extruded resin plate | | | | | Evaluation results for warping of extruded resin plate (mm) | | Thermoforming conditions and eveluation results for laminate for thermoforming | | | | | | | |
|---|---|---|---|---|---|---|---|---|---|---|---|---|---|---|---|
| | Heating condtions | | Re (nm) | | Decrea sing rate of Re | Initial | After high temperature and high humidity (85° C85RH) | Preheating conditions for laminate | | Thermoforming condtions | | Thermalformin g property (Shape processing property) | Surface property | Presence/absenc e of crack in methacrylic-resin-containing layer | Presence/absen ce of crack in cured film |
| | Temper ature (°C) | Time (min) | Before heating | After heating | | | | Tempera ture (°C) | Time (min) | Tempera ture (°C) | Time (min) | | | | |
| Comparative example 1 | 150 | 60 | 160 | 90 | 44% | +0.2 | -0.9 | 150 | 15 | 150 | 10 | ○ | × | Absent | Present |
| Comparative example 2 | 115 | 60 | 130 | 70 | 46% | +0.2 | -0.9 | 105 | 15 | 105 | 10 | ○ | ○ | Absent | Absent |
| Comparative example 3 | 140 | 60 | 130 | 100 | 23% | +0.3 | +0.3 | 140 | 15 | 140 | 10 | ○ | × | Absent | Absent |
| Comparative example 4 | 115 | 60 | 75 | 45 | 40% | +0.4 | +0.4 | 105 | 15 | 105 | 10 | ○ | ○ | Present | Absent |

### [Summary of Results]

In each of the Examples 1 to 18 (Examples 1, 2, 4, 5 and 11 to 18 are reference examples), the temperature TgA was adjusted to 120 to 150°C and the temperature TgB was adjusted to 115 to 135°C. The difference TgA-TgB was adjusted to -10 to +20°C and the temperature TT was adjusted to a temperature in a range between a temperature (TgA-2°C) and a temperature (TgA+20°C). Further, the ratio V4/V2 was adjusted to a ratio no lower than 0.98 and lower than 1.0. In each of these examples, the Re value and the decreasing rate thereof were within suitable ranges, so that extruded resin plates in which warping was less likely to occur by the thermal change were able to be manufactured. In each of the laminates for thermoforming obtained by forming cured films on both surfaces of the extruded resin plates, the thermoforming property (the shaping property) that was exhibited when they were thermoformed at a temperature that is not lower than 110°C and not higher than a temperature (TgA-5°C) was excellent, and no surface roughness nor cracking was observed during the thermoforming.

In the Comparative Example 1, since the difference TgA-TgB was larger than 20°C, the stress exerted to the extruded resin plate during the thermoforming was large, so that cracking occurred in the cured film. Further, since the heating temperature in the evaluation of the Re value and during the thermoforming was adjusted to the same temperature as the temperature TgA, the rate of the decreasing of the Re value of the extruded resin plate due to the heating was large and hence surface roughness occurred during the thermoforming.

In the Comparative Example 2, since the temperature TgA was lower than 120°C, the decreasing rate of the Re value increased.

In the Comparative Example 3, since the difference TgA-TgB was larger than 20°C, the heating temperature during the thermoforming was much higher than the temperature TgB and hence surface roughness occurred during the thermoforming.

In the Comparative Example 4, the temperature TgA was lower than 120°C, the rate of the decreasing of the Re value of the extruded resin plate due to the heating was large. Further, since the difference TgA-TgB was smaller than -5°C, a large stress occurred in the methacrylic-resin-containing layer during the thermoforming and hence cracking occurred in the methacrylic-resin-containing layer.

### Reference Signs List

- 11: T-DIE
- 12: FIRST COOLING ROLL (FIRST COOLING ROLL)
- 13: SECOND COOLING ROLL (SECOND COOLING ROLL)
- 14: THIRD COOLING ROLL (THIRD COOLING ROLL)
- 15: TAKE-OFF ROLL
- 16, 16X, 16Y: EXTRUDED RESIN PLATE
- 17X, 17Y: LAMINATE FOR THERMOFORMING
- 21: POLYCARBONATE-CONTAINING LAYER
- 22, 22A, 22B: METHACRYLIC-RESIN-CONTAINING LAYERS
- 23A, 23B: CURED FILM

## Claims

1. A laminate for thermoforming comprising an extruded resin plate in which a methacrylic-resin-containing layer is laminated on at least one surface of a polycarbonate-containing layer, and a cured film formed on at least one surface of the extruded resin plate,
wherein the polycarbonate-containing layer contains an alloy of polycarbonate and aromatic polyester, and
wherein the extruded resin plate has a total thickness of 0.5 to 5.0 mm,
a glass transition temperature TgA of the polycarbonate-containing layer is 130 to 140°C; a glass transition temperature TgB of methacrylic-resin-containing layer is 120 to 130°C; and a difference TgA-TgB is -1 to +15°C, and
when the extruded resin plate is heated at a temperature that is not lower than 115°C and not higher than a temperature (TgA-5°C) for a constant time within a range of 10 to 60 min, an in-plane retardation value is in a range of 50 to 330 nm in at least a part of the extruded resin plate in a width direction both before and after the heating, and a decreasing rate of the retardation value after the heating from the retardation value before the heating is smaller than 35%,
wherein the glass transition temperature and the decreasing rate of the retardation value are determined according to the methods as disclosed in the description.

2. The laminate for thermoforming according to claim 1, wherein the in-plane retardation value is in a range of 80 to 250 nm in at least a part of the extruded resin plate in the width direction both before and after the heating.

3. The laminate for thermoforming according to any one of Claims 1 to 2, wherein the decreasing rate of the retardation value after the heating from the retardation value before the heating is smaller than 15%.

4. The laminate for thermoforming according to any one of Claims 1 to 3, wherein the methacrylic-resin-containing layer contains a methacrylic acid ester unit and a methacrylic resin having a glass transition temperature of 115 to 135°C.

5. The laminate for thermoforming according to any one of Claims 1 to 4, wherein the methacrylic-resin-containing layer contains 5 to 80 mass% of a methacrylic resin and 95 to 20 mass% of a copolymer containing an aromatic vinyl compound unit and a maleic anhydride unit.

6. The laminate for thermoforming according to Claim 5, wherein the copolymer contains 50 to 84 mass% of the aromatic vinyl compound unit, 15 to 49 mass% of the maleic anhydride unit, and 1 to 35 mass% of the methacrylic acid ester unit.

7. The laminate for thermoforming according to Claim 6, wherein the methacrylic acid ester unit contained in the copolymer is a methyl methacrylate unit.

8. A method for manufacturing a laminate for thermoforming, the laminate for thermoforming comprises an extruded resin plate in which a methacrylic-resin-containing layer is laminated on at least one surface of a polycarbonate-containing layer, and a cured film formed on at least one surface of the extruded resin plate,
wherein the polycarbonate-containing layer contains an alloy of polycarbonate and aromatic polyester, and
wherein a glass transition temperature TgA of the polycarbonate-containing layer of the extruded resin plate is 130 to 140°C; a glass transition temperature TgB of methacrylic-resin-containing layer of the extruded resin plate is 120 to 130°C; and a difference TgA-TgB is -1 to +15°C,
the method comprises:
co-extruding, from a T-die, a molten thermoplastic resin laminate in which the methacrylic-resin-containing layer is laminated on at least one surface of the polycarbonate-containing layer;
cooling the molten thermoplastic resin laminate by using at least three cooling rolls arranged adjacent to each other by repeating an operation a plurality of times from n=1 (n≥1), the operation including sandwiching the thermoplastic resin laminate between an nth cooling roll and an (n+1)th cooling roll, and winding the thermoplastic resin laminate around the (n+1)th cooling roll;
a step (X) of pulling out the extruded resin plate obtained after the cooling by using a take-off roll; and
a step (Y) of forming the cured film on at least one surface of the extruded resin plate, and
in the step (X),
an overall temperature of the thermoplastic resin laminate (TT) at a place where it is separated from a last cooling roll is adjusted to a temperature (TgA-2°C) or higher, and
a circumferential speed ratio (V4/V2) of a circumferential speed (V4) of the take-off roll to a circumferential speed (V2) of the second cooling roll is no lower than 0.98 and lower than 1.0,
wherein the glass transition temperature is determined according to the method as disclosed in the description.

## Patentansprüche

1. Laminat zum Thermoformen, umfassend eine extrudierte Harzplatte, bei der eine Methacrylharz-haltige Schicht auf mindestens eine Oberfläche einer Polycarbonat-haltigen Schicht laminiert ist, und eine ausgehärtete Folie, die auf mindestens einer Oberfläche der extrudierten Harzplatte ausgebildet ist,
wobei die Polycarbonat-haltige Schicht eine Mischung aus Polycarbonat und aromatischem Polyester enthält, und
wobei die extrudierte Harzplatte eine Gesamtdicke von 0,5 bis 5,0 mm aufweist,
eine Glasübergangstemperatur TgA der Polycarbonat-haltigen Schicht 130 bis 140 °C beträgt; eine Glasübergangstemperatur TgB der Methacrylharz-haltigen Schicht 120 bis 130 °C beträgt; und eine Differenz TgA-TgB von -1 bis +15 °C vorliegt, und
wenn die extrudierte Harzplatte bei einer Temperatur, die nicht niedriger als 115 °C und nicht höher als eine Temperatur von (TgA - 5 °C) ist, für eine konstante Zeit im Bereich von 10 bis 60 min erwärmt wird, ein Verzögerungswert in der Ebene in mindestens einem Teil der extrudierten Harzplatte in eine Breitenrichtung sowohl vor als auch nach der Erwärmung in einem Bereich von 50 bis 330 nm liegt, und eine Abnahmerate des Verzögerungswerts nach dem Erwärmen gegenüber dem Verzögerungswert vor dem Erwärmen kleiner als 35 % ist,
wobei die Glasübergangstemperatur und die Abnahmerate des Verzögerungswerts gemäß den in der Beschreibung offenbarten Verfahren bestimmt werden.

2. Laminat zum Thermoformen nach Anspruch 1, wobei der Verzögerungswert in der Ebene in mindestens einem Teil der extrudierten Harzplatte in der Breitenrichtung sowohl vor als auch nach dem Erwärmen in einem Bereich von 80 bis 250 nm liegt.

3. Laminat zum Thermoformen nach einem der Ansprüche 1 bis 2, wobei die Abnahmerate des Verzögerungswerts nach dem Erwärmen gegenüber dem Verzögerungswert vor dem Erwärmen kleiner als 15 % ist.

4. Laminat zum Thermoformen nach einem der Ansprüche 1 bis 3, wobei die Methacrylharz-haltige Schicht eine Methacrylsäureester-Einheit und ein Methacrylharz mit einer Glasübergangstemperatur von 115 bis 135 °C enthält.

5. Laminat zum Thermoformen nach einem der Ansprüche 1 bis 4, wobei die Methacrylharz-haltige Schicht 5 bis 80 Massen% eines Methacrylharzes und 95 bis 20 Massen% eines Copolymers enthält, das eine aromatische Vinylverbindungs-Einheit und eine Maleinsäureanhydrid-Einheit enthält.

6. Laminat zum Thermoformen nach Anspruch 5, wobei das Copolymer 50 bis 84 Massen% der aromatischen Vinylverbindungs-Einheit, 15 bis 49 Massen% der Maleinsäureanhydrid-Einheit und 1 bis 35 Massen% der Methacrylsäureester-Einheit enthält.

7. Laminat zum Thermoformen nach Anspruch 6, wobei die im Copolymer enthaltene Methacrylsäureester-Einheit eine Methylmethacrylat-Einheit ist.

8. Verfahren zur Herstellung eines Laminats zum Thermoformen, wobei das Laminat zum Thermoformen eine extrudierte Harzplatte, bei der eine Methacrylharz-haltige Schicht auf mindestens eine Oberfläche einer Polycarbonat-haltigen Schicht laminiert ist und eine ausgehärtete Folie umfasst, die auf mindestens einer Oberfläche der extrudierten Harzplatte ausgebildet ist,
wobei die polycarbonathaltige Schicht eine Mischung aus Polycarbonat und aromatischem Polyester enthält und
wobei eine Glasübergangstemperatur TgA der Polycarbonat-haltigen Schicht der extrudierten Harzplatte 130 bis 140 °C beträgt; eine Glasübergangstemperatur TgB der Methacrylharz-haltigen Schicht der extrudierten Harzplatte 120 bis 130 °C beträgt; und eine Differenz TgA-TgB von -1 bis +15 °C vorliegt,
wobei das Verfahren umfasst:
das Coextrudieren eines geschmolzenen thermoplastischen Harzlaminats, bei dem die Methacrylharz-haltige Schicht auf mindestens eine Oberfläche der Polycarbonat-haltigen Schicht laminiert ist, aus einer T-Düse;
das Kühlen des geschmolzenen thermoplastischen Harzlaminats unter Verwendung von mindestens drei nebeneinander angeordneten Kühlwalzen durch mehrmaliges Wiederholen eines Arbeitsschritts ab n=1 (n≥1), wobei der Arbeitsschritt das Zwischenlegen des thermoplastischen Harzlaminats zwischen einer n-ten Kühlwalze und einer (n+1)-ten Kühlwalze sowie das Aufwickeln des thermoplastischen Harzlaminats um die (n+1)-te Kühlwalze umfasst;
einen Schritt (X) des Herausziehens der nach dem Kühlen erhaltenen extrudierten Harzplatte unter Verwendung einer Abzugswalze; und
einen Schritt (Y) des Bildens der ausgehärteten Folie auf mindestens einer Oberfläche der extrudierten Harzplatte, und
in dem Schritt (X)
eine Gesamttemperatur des thermoplastischen Harzlaminats (TT) an einer Stelle, an der es von einer letzten Kühlwalze getrennt wird, auf eine Temperatur (TgA-2 °C) oder höher eingestellt wird, und
ein Umfangsgeschwindigkeitsverhältnis (V4/V2) der Umfangsgeschwindigkeit (V4) der Abzugswalze zur Umfangsgeschwindigkeit (V2) der zweiten Kühlwalze nicht kleiner als 0,98 und kleiner als 1,0 ist,
wobei die Glasübergangstemperatur gemäß dem in der Beschreibung offenbarten Verfahren bestimmt wird.

## Revendications

1. Stratifié pour thermoformage comprenant une plaque de résine extrudée dans laquelle une couche contenant de la résine méthacrylique est stratifiée sur au moins une surface d'une couche contenant du polycarbonate, et un film durci formé sur au moins une surface de la plaque de résine extrudée,
dans lequel la couche contenant du polycarbonate contient un alliage de polycarbonate et de polyester aromatique, et
dans lequel la plaque de résine extrudée a une épaisseur totale de 0,5 à 5,0 mm, une température de transition vitreuse TgA de la couche contenant du polycarbonate est de 130 à 140 °C ; une température de transition vitreuse TgB de la couche contenant de la résine méthacrylique est de 120 à 130 °C ; et une différence TgA-TgB est de -1 à +15 °C, et
lorsque la plaque de résine extrudée est chauffée à une température qui n'est pas inférieure à 115 °C et pas supérieure à une température (TgA-5 °C) pendant une durée constante au sein d'une plage de 10 à 60 min, une valeur de retard dans le plan est dans une plage de 50 à 330 nm dans au moins une partie de la plaque de résine extrudée dans un sens de la largeur à la fois avant et après le chauffage, et un taux de diminution de la valeur de retard après le chauffage à partir de la valeur de retard avant le chauffage est inférieur à 35 %,
dans lequel la température de transition vitreuse et le taux de diminution de la valeur de retard sont déterminés conformément aux procédés tels que divulgués dans la description.

2. Stratifié pour thermoformage selon la revendication 1, dans lequel la valeur de retard dans le plan est dans une plage de 80 à 250 nm dans au moins une partie de la plaque de résine extrudée dans le sens de la largeur à la fois avant et après le chauffage.

3. Stratifié pour thermoformage selon l'une quelconque des revendications 1 à 2, dans lequel le taux de diminution de la valeur de retard après le chauffage à partir de la valeur de retard avant le chauffage est inférieur à 15 %.

4. Stratifié pour thermoformage selon l'une quelconque des revendications 1 à 3, dans lequel la couche contenant de la résine méthacrylique contient une unité d'ester d'acide méthacrylique et une résine méthacrylique ayant une température de transition vitreuse de 115 à 135 °C.

5. Stratifié pour thermoformage selon l'une quelconque des revendications 1 à 4, dans lequel la couche contenant de la résine méthacrylique contient 5 à 80 % en masse d'une résine méthacrylique et 95 à 20 % en masse d'un copolymère contenant une unité de composé de vinyle aromatique et une unité d'anhydride maléique.

6. Stratifié pour thermoformage selon la revendication 5, dans lequel le copolymère contient 50 à 84 % en masse de l'unité de composé de vinyle aromatique, 15 à 49 % en masse de l'unité d'anhydride maléique et 1 à 35 % en masse de l'unité d'ester d'acide méthacrylique.

7. Stratifié pour thermoformage selon la revendication 6, dans lequel l'unité d'ester d'acide méthacrylique contenue dans le copolymère est une unité de méthacrylate de méthyle.

8. Procédé de fabrication d'un stratifié pour thermoformage, le stratifié pour thermoformage comprend une plaque de résine extrudée dans laquelle une couche contenant de la résine méthacrylique est stratifiée sur au moins une surface d'une couche contenant du polycarbonate, et un film durci formé sur au moins une surface de la plaque de résine extrudée,
dans lequel la couche contenant du polycarbonate contient un alliage de polycarbonate et de polyester aromatique, et
dans lequel une température de transition vitreuse TgA de la couche contenant du polycarbonate de la plaque de résine extrudée est de 130 à 140 °C ; une température de transition vitreuse TgB de la couche contenant de la résine méthacrylique de la plaque de résine extrudée est de 120 à 130 °C ; et une différence TgA-TgB est de -1 à +15 °C,
le procédé comprend :
coextruder, à partir d'une filière en T, un stratifié de résine thermoplastique fondue dans lequel la couche contenant de la résine méthacrylique est stratifiée sur au moins une surface de la couche contenant du polycarbonate ;
refroidir le stratifié de résine thermoplastique fondue en utilisant au moins trois rouleaux de refroidissement agencés de manière adjacente l'un à l'autre en répétant une opération une pluralité de fois à partir de n=1 (n≥1), l'opération incluant mettre en sandwich le stratifié de résine thermoplastique entre un n^{e} rouleau de refroidissement et un (n+1)^{e} rouleau de refroidissement, et enrouler le stratifié de résine thermoplastique autour du (n+1)^{e} rouleau de refroidissement ;
une étape (X) d'extraction de la plaque de résine extrudée obtenue après le refroidissement en utilisant un dérouleur ; et
une étape (Y) de formation du film durci sur au moins une surface de la plaque de résine extrudée, et
dans l'étape (X),
une température globale du stratifié de résine thermoplastique (TT) à un endroit où il est séparé d'un dernier rouleau de refroidissement est ajustée à une température (TgA-2 °C) ou supérieure, et
un rapport de vitesse circonférentielle (V4/V2) d'une vitesse circonférentielle (V4) du dérouleur sur une vitesse circonférentielle (V2) du deuxième rouleau de refroidissement n'est pas inférieur à 0,98 et inférieur à 1,0,
dans lequel la température de transition vitreuse est déterminée conformément au procédé tel que divulgué dans la description.
